# FASCICULE DE BREVET EUROPEEN

(11) **EP 2 211 185 B1**
(45) Date de publication et mention de la délivrance du brevet: **19.03.2014**
(21) Numéro de dépôt: 10151288.7
(22) Date de dépôt: 21.01.2010
(51) Int. Cl.: G01P 15/097, G01C 19/56

(54) **Capteur inertiel ou résonnant en technologie de surface, à détection hors plan par jauge de contrainte**
Trägheitssensor oder Resonanzsensor in der Oberflächentechnologie zur Erkennung von Abweichungen mit Hilfe eines Dehnungsmessers
Inertial sensor unit or resonant sensor with surface technology, with out-of-plane detection by strain gauge

(30) Priorité: 23.01.2009 FR 0950431
(43) Date de publication de la demande: 28.07.2010
(73) Titulaire: Commissariat à l'Énergie Atomique et aux Énergies Alternatives, 75015 Paris (FR)
(72) Inventeur: Robert, Philippe, 38000, GRENOBLE (FR)
(74) Mandataire: Ilgart, Jean-Christophe

(56) Documents cités:
- EP-A- 1 840 582
- FR-A- 2 763 694
- AIKELE M ET AL: "Resonant accelerometer with self-test" SENSORS AND ACTUATORS A, ELSEVIER SEQUOIA S.A., LAUSANNE, CH, vol. 92, no. 1-3, 1 août 2001 (2001-08-01) , pages 161-167, XP004274041 ISSN: 0924-4247

## Description

### DOMAINE TECHNIQUE ET ÉTAT DE LA TECHNIQUE ANTÉRIEURE

L'invention concerne le domaine des micro-capteurs, notamment en silicium, par exemple les capteurs inertiels, notamment des accéléromètres.

Elle trouve application dans des domaines variés, tels que l'automobile, la téléphonie mobile ou l'avionique.

De manière connue, les capteurs résonants peuvent être réalisés :
- Soit en technologie de volume, auquel cas l'élément sensible du capteur est réalisé sur toute l'épaisseur d'un substrat en silicium ou en quartz, en utilisant des gravures humides ; une telle technique est décrite dans le document FR 2 763 694.
- Soit en technologie de surface : cette technique est décrite dans les documents « Resonant accelerometer with self test », de M.Aikele et al., Sensors and Actuators, A92, 2001, p. 161-167, et EP 1840582..

Les capteurs inertiels réalisés en technologie de volume sont basés sur une excitation électrostatique hors plan du résonateur. Ils sont d'encombrement important.

Ils nécessitent le report de 2 substrats, dont l'un sert à réaliser la (ou les) électrode(s) d'excitation/détection et le second sert à fermer la cavité sous vide. Il faut en outre contrôler le gap entre les substrats reportés. Les technologies mises en jeu sont donc lourdes.

Dans ce type de technique, le résonateur de détection est aminci par rapport au substrat, et a donc une épaisseur différente de la masse mobile. Cet amincissement, qui est très mal contrôlé, est, entre autre, rendu nécessaire par le mode de vibration de la poutre qui se fait hors plan.

Un autre problème de ce type de technique réside dans le positionnement du résonateur, qui ne peut pas être optimisé pour augmenter l'effet de bras de levier. En effet, afin de minimiser l'entrefer entre le résonateur et son électrode d'excitation, le résonateur est placé en surface du substrat. De manière optimum, le résonateur devrait se situer le plus près possible de la charnière (axe de rotation de la masse).

Il se pose donc le problème de trouver une nouvelle conception de composants, encore plus miniaturisés, permettant de surmonter les problèmes ci-dessus.

### EXPOSÉ DE L'INVENTION

L'invention propose un nouveau type de capteur, réalisé en technologie planaire, permettant de détecter un effort hors plan appliqué à une masse mécanique libérée, et mettant en oeuvre une détection par une ou plusieurs jauges suspendues, par exemple de type piézorésistive ou résonateur (poutre ou diapason). Ce capteur selon l'invention permet de réaliser entre autres un accéléromètre ou un capteur de masse. Il permet en particulier une détection par jauge piézorésistive mais d'autres types de détection sont possibles.

Ce capteur permet d'optimiser séparément les formes, matériaux et épaisseurs de la partie mobile (masse inertielle) et de la jauge utilisée pour la détection et la mesure de la contrainte.

Plus précisément, l'invention a pour objet un capteur MEMS de type de surface, réalisé dans un substrat, **caractérisé en ce qu**'il comporte :
a) Une première zone, dite zone épaisse, présentant une première épaisseur, formant au moins une masse mobile, dont une première et une deuxième surfaces sont respectivement dans un premier plan et un deuxième plan, parallèles entre eux; cette masse est à mouvement hors de ces plans,
b) une deuxième zone, formant au moins une liaison pivot pour la masse mobile, reliée à la masse mobile et au substrat, l'axe de la liaison pivot, ou axe de torsion, étant dans le plan du capteur ou du substrat,
c) une troisième zone, dite zone mince, d'épaisseur inférieure ou égale à celle de la deuxième zone, formant au moins une jauge de contrainte de type suspendue pour la détection du mouvement de la masse mobile autour de l'axe de la liaison pivot, cette troisième zone :
   - s'étendant parallèlement ou dans un plan parallèle au plan du capteur ou du substrat mais ne contenant pas l'axe de torsion du pivot,
   - s'étendant de plus perpendiculairement ou dans un plan perpendiculaire à l'axe de torsion du pivot,
   - étant reliée à la première zone d'un coté par au moins un point d'application de contraintes et au substrat de l'autre coté, par exemple par des liaisons de type encastrement.

Un tel positionnement de la troisième zone permet d'avoir une épaisseur de la zone pivot indépendante de l'épaisseur de la troisième zone et permet de plus d'obtenir préférentiellement que le ou les point(s) d'application de contraintes imposées par la première zone sur la troisième zone soit à l'aplomb de l'axe pivot H, c'est-à-dire dans un plan perpendiculaire à N1 et/ou N2 contenant l'axe pivot H. Cela permet d'augmenter le bras de levier de la masse sismique sur les jauges de contraintes.

La deuxième zone a, suivant une direction perpendiculaire au plan du substrat, une partie inférieure et une partie supérieure, l'une de ces deux parties étant dans le premier plan ou dans le deuxième plan de la première zone, qui est donc dit plan commun aux première et deuxième zones. Autrement dit, la partie supérieure de la deuxième zone est située dans le premier plan (ou plan supérieur) de la première zone et/ou la partie inférieure de la deuxième zone est située dans le deuxième plan (ou plan inférieur) de la première zone.

La troisième zone a, suivant une direction perpendiculaire au plan du substrat, une partie inférieure et une partie supérieure, l'une de ces deux parties pouvant être dans le plan commun aux première et deuxième zones.

Dans un dispositif selon l'invention, l'épaisseur de la deuxième zone (formant pivot) est indépendante de l'épaisseur de la troisième zone.

La différence d'épaisseur entre la troisième zone et la deuxième zone permet d'avoir une contrainte en tension ou en compression : si ces deux zones étaient d'une même épaisseur, on ne pourrait pas avoir accès indépendamment à ces contraintes. Dans le cas d'une détection par effet piezoélectrique, celui-ci serait alors annulé.

De préférence, le ou les point(s) d'application de contraintes imposées par la première zone sur la troisième zone est à l'aplomb de l'axe pivot H, c'est-à-dire dans un plan perpendiculaire au premier plan et/ou au deuxième plan de la première zone et contenant l'axe pivot H. Cela permet d'augmenter le bras de levier de la masse sismique sur les jauges de contraintes.

La première et la seconde zone peuvent être formées dans un ou des matériaux semi-conducteurs et/ou isolants. La première et la seconde zone peuvent être dans des matériaux identiques ou différents.

On entend par capteur MEMS des capteurs comprenant des éléments microniques et/ou sub-microniques.

De préférence :
- la deuxième zone a une épaisseur inférieure à celle de la masse mobile,
- et/ou a une largeur, suivant la direction de l'axe pivot, inférieure à la largeur de la masse mobile suivant cette même direction,
- et/ou a une extension suivant une direction parallèle à l'axe pivot; la deuxième zone comporte par exemple deux portions allongées, chacune disposée d'un côté de la masse mobile, ou disposée dans une ouverture réalisée dans la masse mobile.

Dans un capteur selon l'invention la deuxième zone, formant une liaison pivot pour la masse mobile, ne permet qu'un mouvement de rotation de cette dernière autour de l'axe pivot, empêchant tout autre mouvement de la masse mobile. En particulier, la deuxième zone peut comporter plusieurs tronçons alignés le long de l'axe pivot.

La masse mobile peut avoir une épaisseur strictement supérieure à celle de la deuxième zone (formant pivot). Cette dernière a elle même une épaisseur strictement supérieure à celle de la troisième zone, comportant la ou les jauges de contraintes, avantageusement supérieure à deux fois l'épaisseur de la troisième zone.

La ou les jauges de contrainte et la masse mobile peuvent avoir un plan commun, qui peut être le plan inférieur de la masse. Les jauges et la masse mobile sont alors situées d'un même côté par rapport à ce plan. En variante elles peuvent avoir comme plan commun le plan supérieur de la masse. Les jauges sont alors situées d'un coté de ce plan et la masse mobile de l'autre coté.

De préférence, l'axe de la liaison pivot est dans un plan passant par le centre de gravité G de la masse mobile. Ce plan est parallèle au premier plan et au deuxième plan.

La troisième zone peut comporter au moins deux jauges de contraintes, situées de manière anti-symétrique l'une par rapport à l'autre et par rapport :
- à un plan perpendiculaire au premier et deuxième plans de la masse mobile et contenant l'axe de torsion,
- et à un plan perpendiculaire à l'axe de torsion.

La ou les jauge(s) de contrainte peut être en matériau piézorésistif tel que du silicium mono cristallin ou poly-cristallin ou du SiGe, ou des nanofils, par exemple en silicium, ou des nanotubes, par exemple en carbone. Elle peut alors être utilisée comme jauge suspendue, dont on mesure alors la variation de résistance électrique en fonction de la contrainte qui y est exercée.

Elle peut être réalisée par gravure dans un substrat semi-conducteur. En variante, elle peut être réalisée par dépôt d'un matériau piézorésistif tel que du silicium poly-cristallin, des nano-fils de silicium, des nanotubes de carbones. Alternativement, la jauge peut être dans un matériau, tel qu'un métal, pour lequel la déformation modifie la résistance, par des effets géométriques.

Des nanofils, en particulier des nanofils en silicium, sont des structures de forme allongée suivant une direction, cette direction étant nommée longueur. Les dimensions transverses, dans une section perpendiculaire à cette direction sont très inférieures à cette longueur. Ces dimensions transverses sont typiquement inférieures à 100 nm, préférentiellement inférieures à 50 nm ou 40 nm et avantageusement inférieures à 20 nm. Des nanofils orientés suivant une direction X, contenue dans le plan d'un substrat, peuvent être obtenus en gravant une poutre de silicium suivant des directions transverses Y et Z, ou par croissance d'un nanofil, par exemple par dépôt SLV catalysé.

La ou les jauge(s) peuvent être du type simple branche ou du type double branche.

La jauge, par exemple à résistance variable, peut être du type simple branche, un courant pouvant par exemple rentrer par la jauge et sortir par une des zones de pivot ou inversement. En variante, la jauge peut être du type double branche, un courant pouvant entrer par une des branches et sortir par une autre. Les deux branches peuvent être parallèles entre elles, une isolation électrique étant préférentiellement prévue entre d'une part la jauge et d'autre part la première zone.

Alternativement, la ou les jauge(s) de contrainte peut comporter un résonateur de détection à vibration dans le plan du substrat, comportant au moins une lame vibrante, un moyen d'excitation et un moyen de détection de la vibration.

La jauge de contrainte peut donc être un résonateur de détection, par exemple de type poutre ou diapason, dont on mesure alors la variation de fréquence en fonction de la contrainte qui y est exercée.

La mise en vibration de la jauge dans le plan du substrat peut se faire par des moyens électrostatiques. Le résonateur de détection est excité à la résonance. La variation de fréquence de vibration du résonateur de détection est fonction de la contrainte exercée par la masse.

L'excitation de la lame vibrante et/ou la détection de la résonance peut alors se faire par des moyens électrostatiques par le biais d'au moins une électrode disposée, par rapport à la lame vibrante, dans la direction de vibration.

La détection de la résonance peut aussi se faire par le biais de moyens piézorésistifs disposés sur la lame vibrante.

Les vibrations peuvent donc être mesurées par des électrodes disposées dans le plan du capteur. Ou bien, la jauge est excitée par des moyens électrostatiques, et les contraintes mesurées, par des moyens piézoélectriques disposées sur le résonateur.

Un capteur selon l'invention peut être un capteur de type accéléromètre, la contrainte appliquée par la masse étant due à l'inertie de la masse lors d'un déplacement de l'ensemble du capteur.

Dans ce cas, une accélération hors du plan du capteur va faire pivoter la première zone, qui forme masse mobile, d'un angle α autour de l'axe de la liaison pivot de la deuxième zone. Cette rotation de la masse mobile va exercer une contrainte sur la jauge de contraintes. Dans le cas où la jauge est un résonateur, cette contrainte induit une variation de sa fréquence et/ou de l'amplitude de vibration. Dans le cas où la jauge est de type piezorésistive ou du type jauge métallique suspendue, cette contrainte induit une variation de sa résistance électrique, proportionnelle à la contrainte exercée. Il est alors possible de calculer l'accélération.

Dans un capteur selon l'invention, l'axe pivot et l'axe central de la jauge sont dans deux plans différents, parallèles au plan du capteur ou du substrat dans lequel celui-ci est réalisé. La contrainte sur la jauge est amplifiée par le bras de levier formé entre le centre de gravité G de la masse mobile, où s'applique la force due à l'accélération, l'axe pivot et le point d'application de la contrainte sur la jauge. Plus ce point d'application est proche de l'axe pivot H, sans toutefois être sur cet axe, plus la contrainte mesurée est importante.

Le point d'application de la contrainte sur la jauge est préférentiellement situé à l'aplomb de l'axe pivot. De préférence encore, l'axe pivot est situé dans un même plan, parallèle à celui du capteur, que le centre de gravité de la masse mobile.

Un dispositif selon l'invention peut en outre comporter des moyens de mise en vibration ou en mouvement de la masse mobile, notamment pour la réalisation de capteurs chimiques ou capteurs de masse. Ces moyens de mise en vibration ou en mouvement de la masse mobile peuvent comporter:
- une électrode présente sur le substrat en regard de l'une des faces principales de la masse mobile ; cette électrode peut être reliée à un générateur de tension apte à produire une tension périodiquement variable, la masse mobile étant alors reliée au même générateur de tension,
- ou une couche de matériau conducteur déposée sur la masse mobile et reliée au substrat, isolée électriquement de la masse mobile, par exemple par une couche isolante, formant un bilame avec la masse mobile ; cette couche peut être reliée à un générateur de tension apte à produire une tension périodiquement variable,
- ou une couche de matériau piézoélectrique, déposée sur la masse mobile et reliée au substrat ; cette couche peut être reliée électriquement à des moyens de production d'une tension périodiquement variable au sein du matériau piézoélectrique, par exemple des électrodes présentes sur et sous la couche piézoélectrique.

Des moyens de production d'une tension périodiquement variable peuvent comporter :
- des électrodes entre lesquelles est déposée le matériau piézoélectrique,
- un générateur de tension relié aux dites électrodes.

Une variation de tension ou de courant imposée au moyen de mise en vibration conduit à une déformation locale de la masse et donc à une mise en mouvement. Ce mouvement devient une vibration si l'impulsion donnée par la zone de mise en vibration est due à, par exemple, l'impulsion d'un courant alternatif.

L'invention concerne donc également un capteur de masse chimique de type résonateur, comportant un dispositif selon l'invention muni de moyens de mise en vibration de la masse mobile. La masse mobile mise en vibration peut alors être désigné sous l'appellation « poutre vibrante ».

Avantageusement, la poutre vibrante peut comporter en outre à sa surface des moyens pour sélectionner des molécules ou un type ou plusieurs types de molécules ou des familles de molécules pouvant être adsorbé ou absorbé à la surface, par exemple au moyen de radicaux de molécules donnés ou d'une couche de matériau sensible à un seul type de molécule.

Par exemple, la surface de la poutre vibrante peut être recouverte par un matériau réagissant de façon particulière à un élément chimique et/ou biochimique et/ou comporte des molécules d'accroche spécifiques à une molécule ou une famille de molécules.

Ainsi, vibrant dans un milieu contenant la ou les molécules ciblées, la poutre vibrante voit sa masse augmenter au fur et à mesure que des molécules sont adsorbées. La fréquence de vibration de la poutre vibrante varie alors et les contraintes appliquées sur les jauges de contraintes sont modifiées.

Un tel dispositif peut être utilisé pour détecter la présence et/ou la concentration d'une ou plusieurs molécules dans un milieu.

Un avantage de ce dispositif, par rapport à un capteur chimique de masse dont l'axe de déplacement de la poutre vibrante est dans le plan, est le suivant. La mise en vibration, selon un axe perpendiculaire au plan du substrat, pour une poutre vibrante, en particulier une poutre de largeur importante, offrant une surface de capture de molécules importante, est plus facile à réaliser en technologie de couches minces qu'une mise en vibration dans le plan.

Lors de la mise en oeuvre d'un dispositif selon l'invention, la masse mobile est avantageusement dans un environnement gazeux ou dans le vide. Dans le cas d'un capteur de masse, ou capteur chimique, la masse mobile, ou poutre vibrante, est amenée en contact avec le fluide porteur.

Une jauge de contrainte de type résonateur de détection, quand à elle, est avantageusement dans un milieu proche du vide. En effet, une atténuation due à un milieu gazeux aurait pour effet de dégrader le facteur de qualité du résonateur et donc de diminuer la résolution du capteur.

Ainsi, pour ces raisons, un dispositif selon l'invention, aura préférentiellement une jauge de contrainte à résistance variable, par exemple du type piézo-résisitif.

Dans un dispositif selon l'invention, toute les connections électriques peuvent se faire par intégration sur la face avant du substrat, avant et/ou après formation du dispositif suivant l'invention.

L'invention a également pour objet un procédé de fabrication d'un capteur MEMS de type de surface, caractérisé :
- en ce que le capteur est fabriqué dans une couche de matériau semi-conducteur, par exemple du silicium monocristallin ou polycristallin ou dans une couche de SiGe, présente au dessus d'une couche sacrificielle, elle-même par exemple déposée sur un substrat semi-conducteur ou isolant de type verre,
- et en ce que le procédé consiste en la réalisation de :
   a) une première zone, présentant une première épaisseur, formant au moins une masse mobile,
   b) une deuxième zone, reliée à la masse mobile de façon à ce que le seul axe de mouvement permis à la masse mobile soit une rotation suivant un axe compris dans le plan du capteur, dit axe de torsion du pivot, la deuxième zone formant ainsi une liaison pivot dans le plan du capteur,
   c) une troisième zone, dite zone mince, d'épaisseur plus faible que celle de la zone épaisse, formant au moins une jauge de contrainte de type suspendue pour la détection du mouvement de la masse mobile autour de l'axe de la liaison pivot, cette troisième zone :

- s'étendant dans un plan parallèle au plan du capteur mais ne contenant pas l'axe de torsion du pivot,
- s'étendant dans un plan perpendiculaire à l'axe de torsion du pivot,
- étant reliée à la masse mobile.

Les trois zones peuvent être formées par gravure d'une couche de matériau semi-conducteur, la gravure de la couche sacrificielle permettant de libérer l'élément mobile du capteur.

Elles peuvent notamment être formées par gravure d'une couche superficielle de matériau semi-conducteur d'un substrat SOI, la couche d'oxyde du SOI servant de couche sacrificielle et d'isolant électrique pour les parties fixes.

La zone mince peut être réalisée dans une couche superficielle déposée sur le substrat semi-conducteur, les deux premières zones formées par gravure d'une couche de matériau semi-conducteur, la gravure de la couche sacrificielle permettant de libérer l'élément mobile du capteur.

La deuxième zone peut être d'épaisseur comprise entre celle de la première zone et celle de la troisième zone. La deuxième zone peut être d'épaisseur égale à celle de la première zone.

Ce procédé permet de réaliser un dispositif selon l'invention, tel que décrit ci-dessus. Les autres caractéristiques d'un dispositif selon l'invention s'appliquent donc à un procédé selon l'invention.

### BRÈVE DESCRIPTION DES DESSINS

- Les figures 1A et 1B représentent, respectivement en vue de côté et de dessus, un capteur accélérométrique selon l'invention, de type planaire, avec axe sensible hors plan et jauge de contrainte gravée,
- les figures 1C et 1D représentent, respectivement en vue de côté et de dessus, un autre capteur accélérométrique selon l'invention, de type planaire, avec axe sensible hors plan et jauge de contrainte déposée,
- les figures 1E et 1F représentent, toutes deux en vue de côté, un autre capteur accélérométrique selon l'invention, de type planaire, avec axe sensible hors plan et jauge de contrainte, et zone de pivot d'épaisseur réduite,
- la figure 1G représente un capteur selon l'invention, dont la jauge de contrainte est du type résonateur de détection,
- les figures 2A à 2C représentent des schémas d'un pont de Wheatstone (figure 2A), appliqué à un dispositif selon l'invention, à jauge simple (figure 2B) ou double (figure 2C),
- les figures 3A et 3B représentent, respectivement en vue de côté et de dessus, un autre capteur accélérométrique selon l'invention, de type planaire, avec axe sensible hors plan et jauges de contraintes montées en différentiel ou en opposition,
- les figures 3C et 3D représentent le schéma d'un pont de Wheatstone différentiel (figure 3C) et son application à un dispositif selon l'invention, ayant deux jauges et ayant dans ce cas une zone pivot large (figure 3D),
- les figures 4A à 4E représentent un schéma d'un dispositif selon l'invention du type capteur de masse vibrant, selon un premier (figures 4A et 4B), un second (figures 4C et 4D), et un troisième (figure 4E) mode de mise en vibration de la masse mobile,
- les figures 5A-5G et 6A-6F, représentent un premier mode de réalisation d'un procédé selon l'invention,
- les figures 7A-7J et 8A-8H représentent un deuxième mode de réalisation d'un procédé selon l'invention.
- les figures 9A-9D représentent des variantes d'un dispositif selon l'invention.

### EXPOSÉ DÉTAILLÉ DE MODES DE RÉALISATION PARTICULIERS

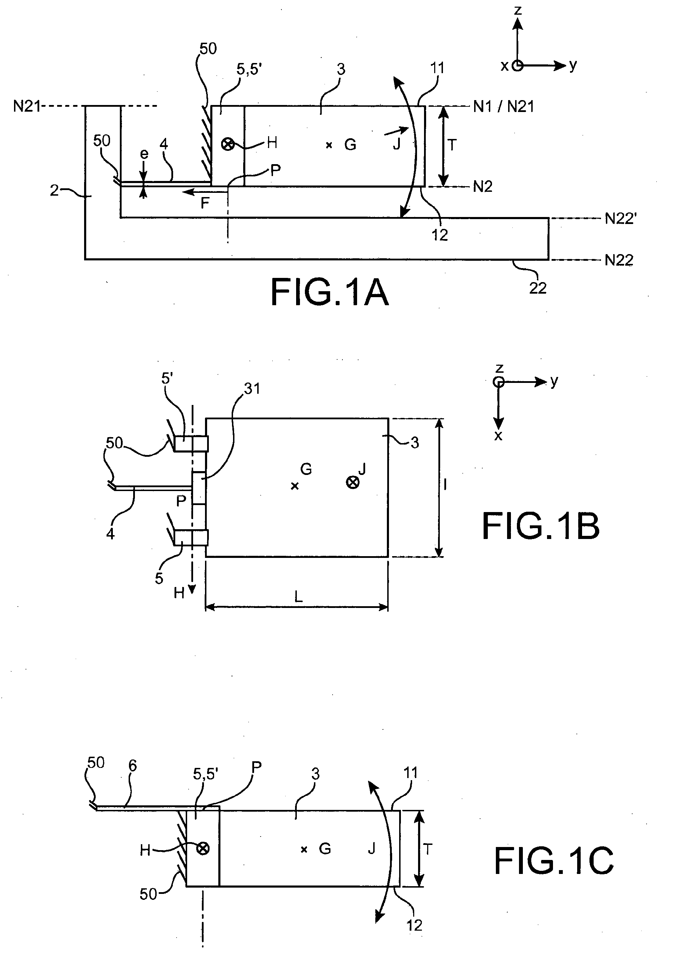

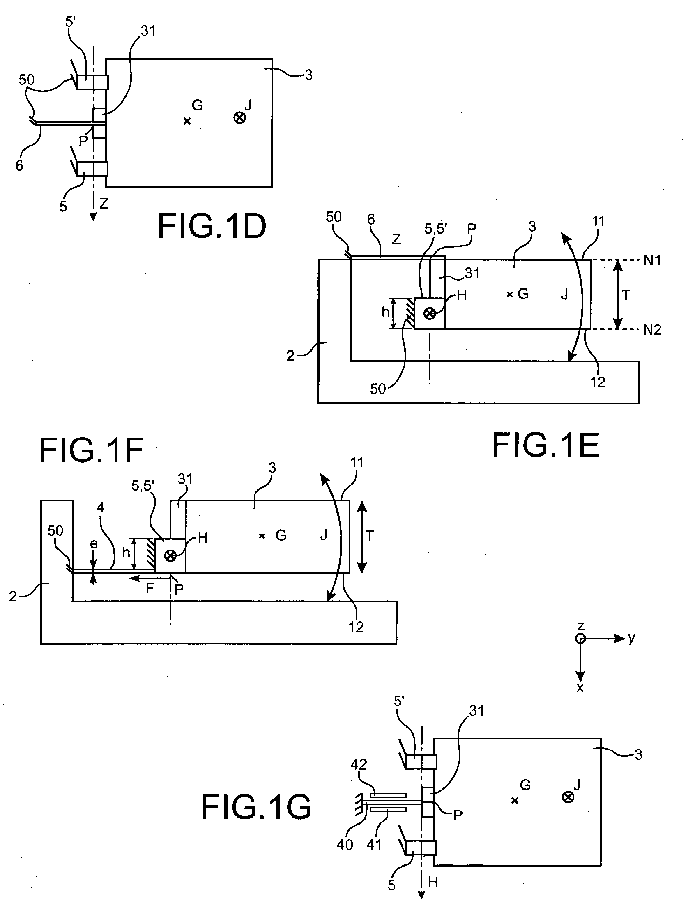

Différents modes de réalisation sont illustrés par les figures 1 à 4 dans lesquelles la référence à un même élément est commune aux différentes figures.

Des propriétés communes aux divers modes de réalisation de l'invention vont d'abord être décrites. Les particularités de chacun des modes de réalisation seront ensuite présentées.

Un capteur selon l'invention est compris ou réalisé dans un substrat ou une plaquette 2, par exemple en matériau semi-conducteur, par exemple en silicium monocristallin ou polycristallin ou encore dans une couche de SiGe, déposée sur un substrat en silicium ou en un matériau de type verre. Cette plaquette a une face supérieure 21 (ou première face) et une face inférieure 22 (ou deuxième face). Ces références numériques sont représentées sur la figure 1A à titre d'exemple mais seront éventuellement rappelées sur d'autres figures. Ces deux faces 21 et 22 sont parallèles entre elles et chacune est située dans un plan N21, N22 (que l'on peut appeler plan supérieur N21 et plan inférieur N22, ou encore premier plan de la plaquette N21 et deuxième plan de la plaquette N22). Ainsi, le capteur, ou sa masse mobile 3, compris dans la plaquette 2, comprend lui aussi une face supérieure 11 (ou première face) et une face inférieure 12 (ou deuxième face), la face supérieure 11 du capteur étant dans un plan N1 qui peut être identique au plan N21 de la face supérieure 21 de la plaquette. La face inférieure 12 du capteur est dans un plan N2, différent du plan inférieur de la plaquette N22. N2 est compris entre les plans supérieurs N1/N21 et le plan inférieur de la plaquette N22. Dans la suite, les termes « face » ou « plan », sans mention de plaquette, correspondent aux plans et faces du capteur : N1 et N2.

Les adjectifs « inférieur » et « supérieur » sont choisis à titre de commodité, mais n'expriment pas une position relative définitive de l'un des plans par rapport à l'autre. On peut aussi employer respectivement les expressions « première face » et « deuxième face ». La face dite inférieure de la masse 3 fait face, et est parallèle, à une face 22' du substrat mise à jour par gravure lors de la mise en oeuvre d'un procédé de réalisation du dispositif selon l'invention. Cette face 22' est par exemple comprise dans un plan N22' compris entre N2 et N22.

On définit un repère orthonormé, comportant deux axes perpendiculaires l'un par rapport à l'autre, X et Y, situés dans l'un des plans N définis ci-dessus, le troisième axe, Z, étant l'axe perpendiculaire aux plans N.

Un dispositif accélérométrique selon l'invention comporte une masse 3 d'une première épaisseur T, mesurée suivant la direction Z perpendiculaire aux faces ou au plan de la plaquette (de même que les épaisseurs mentionnées dans la suite de ce texte). Les plans de cette masse parallèles au plan N de la plaquette définissent les premier plan N1 et deuxième plan N2 du capteur. Cette masse 3 forme une masse mobile. Elle peut être en même matériau que le substrat 2. Elle est par exemple en silicium monocristallin ou polycristallin ou encore en SiGe, ou en un matériau de type verre. L'épaisseur T de la masse 3 est par exemple comprise entre quelques 500 nm et quelques 10 µm, par exemple 1 µm.

En outre la masse 3 peut avoir une longueur L, mesurée selon l'axe Y du plan XY, comprise entre quelques micromètres et quelques centaines de µm, par exemple entre 10 µm ou 50 µm et 100 µm ou 200 µm ou 500 µm, et une largeur l, mesurée selon l'axe X du plan XY, qui peut être comprise entre quelques µm et quelques centaines de µm, par exemple entre 10 µm ou 50 µm et 100 µm ou 200 µm ou 500 µm.

Cette masse mobile est reliée à une deuxième zone 5, de deuxième épaisseur, qui forme ainsi une liaison pivot, aussi appelée charnière, d'axe H parallèle aux plans N définis ci-dessus (cet axe H est perpendiculaire au plan de la figure 1A). L'axe H est disposé entre le premier plan (N1) et le deuxième plan (N2) de la masse 3, et parallèle à chacun d'eux. L'axe X du référentiel lié au substrat peut être choisi comme étant la direction de l'axe H de rotation. Par ailleurs, Z est perpendiculaire à chacun des plans N. Il suffit donc de choisir la direction Y perpendiculaire aux directions X et Z pour définir complètement le repère orthonormé.

La zone formant pivot comporte une partie supérieure et une partie inférieure disposées à des altitudes différentes selon l'axe Z. Elle est comprise entre les deux plans N1 et N2 qui englobent respectivement la face supérieure et la face inférieure de la masse 3. Si sa partie inférieure est dans le plan N2, le plan N2 est dit plan commun aux première et deuxième parties. En plus, ou en variante, la partie supérieure de la zone formant pivot peut être dans le plan N1, et le plan N1 est alors dit plan commun aux première et deuxième parties. Dans le mode de réalisation de la figure 1A, la partie supérieure et la partie inférieure de la zone formant pivot sont respectivement dans le plan N1 et dans le plan N2, ces deux plans N1 et N2 sont donc communs aux première et deuxième parties.

Avantageusement, la géométrie et/ou les dimensions de la zone pivot sont telles que l'axe de rotation H est dans un plan parallèle aux plans N passant par le centre de gravité G de la masse mobile. Ceci permet de réduire la sensibilité aux accélérations transverses. On obtient cette position particulière de l'axe de rotation notamment quand les épaisseurs des première et deuxième zones sont égales suivant la direction Z.

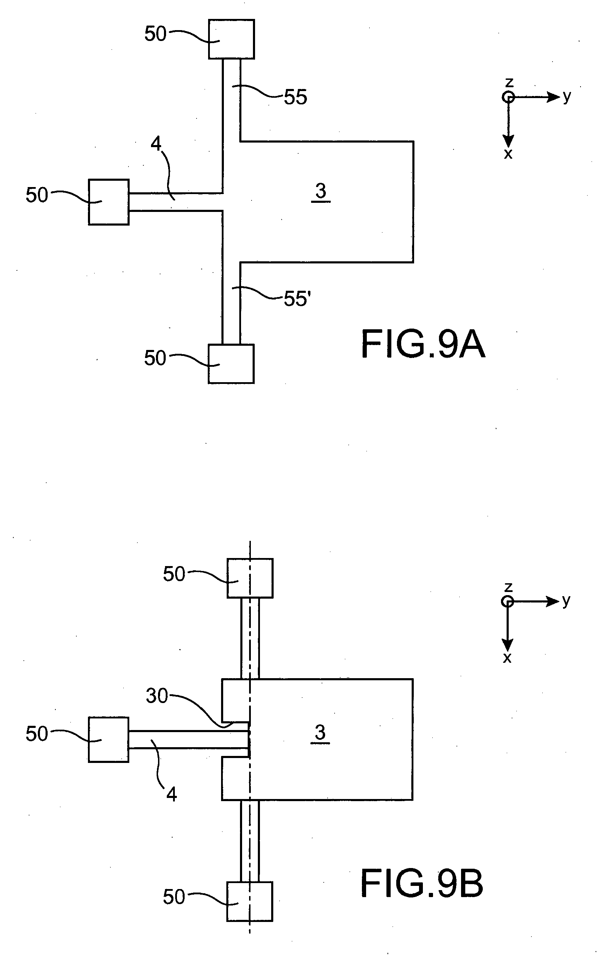

La masse mobile 3 peut effectuer une rotation J autour de l'axe pivot et ne peut effectuer aucun autre mouvement dans le référentiel orthonormé XYZ lié au substrat, et notamment aucune rotation autour d'un autre axe. Dans les variantes du mode de réalisation des figures 1A - 1G ou 9A - 9D, cet effet de blocage des autres rotations est obtenu en ce que la zone pivot ou charnière est composée de deux parties 5 et 5' alignées le long de l'axe H. Alternativement la zone charnière peut être d'un seul tenant, suffisamment large suivant la direction X pour limiter les rotations de la masse suivant les autres axes. Le mouvement permis à la masse mobile 3 est donc un mouvement J hors du plan du capteur. La zone charnière 5, est reliée à la masse mobile 3 et à une zone fixe 50 du dispositif. Elle a par exemple une liaison du type encastrement avec le substrat dans lequel le dispositif est formé.

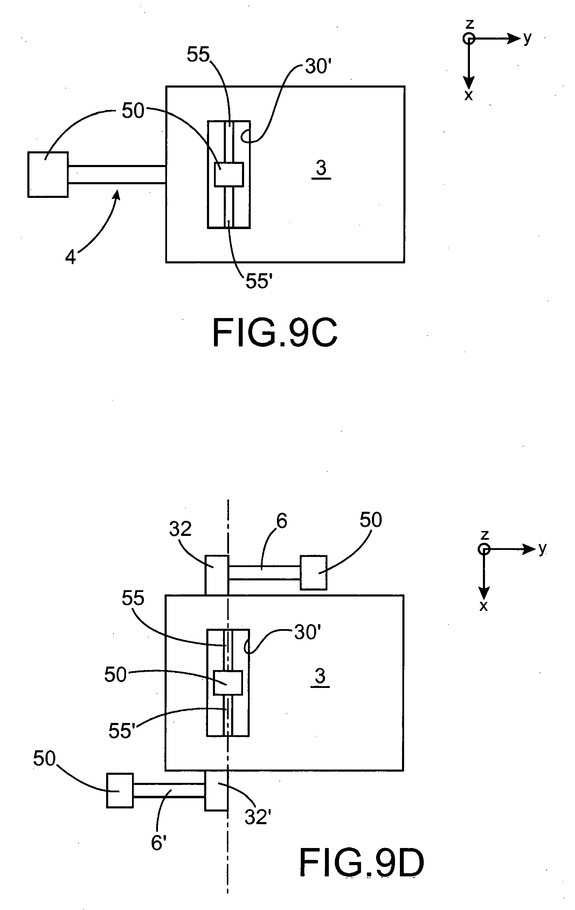

De préférence :
- la deuxième zone a une épaisseur inférieure à celle de la masse 3 (y compris dans le cas des figures 9A - 9D),
- et/ou a une largeur, suivant la direction de l'axe pivot H, inférieure à la largeur de la masse mobile 3 suivant cette même direction,
- et/ou comporte deux bras allongés, disposés de part et d'autre de la masse mobile 3 (figures 9A - 9B) ou dans une encoche 30' réalisée dans cette masse mobile (figures 9C et 9D).

Ainsi, un mouvement de la masse mobile entraîne une déformation de la deuxième zone (zone pivot) et non pas une déformation de toute la masse mobile.

Enfin, une troisième zone 4 forme au moins une jauge de contrainte suspendue, d'épaisseur e plus faible que celle de la masse mobile T. Elle forme un moyen de détection du mouvement de la masse mobile 3. Préférentiellement, l'épaisseur e de la ou des jauge(s) est comprise entre, d'une part, 10 nm ou quelques dizaines de nm (par exemple 40 nm pour une jauge de contrainte du type nanofil ou 200 nm pour une jauge de contrainte suspendue en silicium polycristallin), et, d'autre part, quelques micromètres, par exemple 1 µm ou 5 µm ou 10 µm.

Une jauge dite de type « suspendue » est maintenue entre deux parties dites parties d'extrémités. La partie de la jauge, dite partie centrale, disposée entre ces deux parties d'extrémités est de longueur non nulle et n'est en contact avec aucun autre matériau, et notamment aucun des matériaux parmi ceux composant le capteur.

En général une telle jauge est de forme allongée suivant une direction, et de longueur, dite longueur de la jauge, très grande dans cette direction devant chaque dimension mesurée dans une section perpendiculaire à ladite direction. Elle est maintenue en deux parties d'extrémités qui sont chacune de longueur faible ou très faible devant la longueur de la jauge ou de sa partie centrale.

Cette jauge de contrainte 4 s'étend dans un plan qui est parallèle au plan du capteur mais qui ne contient pas l'axe H de rotation de la liaison pivot, comme cela apparaît sur la figure 1A. Ceci reste vrai dans les modes de réalisation des figures 9A-9D. Elle est en contact à l'une de ses extrémités avec la masse mobile, à son autre extrémité au substrat qui la maintient fixe. Ces deux points de contact peuvent être par exemple des liaisons de type encastrement. Cette jauge de contrainte 4 est disposée entre deux plans, ou comporte, une partie inférieure et une partie supérieure positionnés à des altitudes différentes suivant une direction perpendiculaire à celle du substrat. L'un de ces plans, ou l'une de ces parties, est l'un des plans N1, N2, ou est contenu dans l'un de ces plans, et de préférence le plan commun aux première et deuxième zones. Dans ce cas, la jauge est dite alignée avec la partie supérieure ou inférieure de la deuxième zone et de la masse mobile 3 (lorsque celle-ci est au repos).

Comme on le comprend d'après les figures 1A et 1B, la deuxième zone et la troisième zone ont chacune une largeur, suivant l'axe X, inférieure à celle de la masse 3 mesurée aussi suivant X. La somme de ces largeurs des troisième et deuxième zones est inférieure à celle de la masse. C'est en particulier le cas lorsque la jauge a un plan dans le plan commun des première et deuxième zones. Mais ce peut être aussi le cas pour tout mode de réalisation de l'invention, quelle que soit la position de la jauge et de la deuxième zone.

Cette troisième zone est avantageusement en un matériau piézorésistif, par exemple en silicium monocristallin ou poly-cristallin, ou elle est composée de nanotubes de carbones, ou de nano-fils de silicium, ou en métal ... etc.

Alternativement la jauge de contrainte, comme cela est présenté plus bas, peut être un résonateur de détection.

Une rotation J de la masse mobile autour de la liaison pivot Z se traduit par l'application d'une force F exercée sur la ou les jauge(s) de contrainte 4. Le point d'application P de la contrainte sur la jauge 4 est avantageusement dans un plan contenant l'axe H de la liaison pivot et perpendiculaire au plan du substrat ou à chacun des plans supérieur N2 et inférieur N1. Ce point d'application est alors dit « à l'aplomb» de l'axe H de rotation de la liaison pivot 5, ce qui permet de n'avoir, au premier ordre, qu'une contrainte axiale sur la jauge. Préférentiellement, la direction de la jauge de contrainte 4 est normale au plan contenant l'axe H qui est lui même perpendiculaire au plan du dispositif.

Un premier mode de réalisation de l'invention concerne un dispositif de type accéléromètre (figures 1A à 1G). Des variantes vont en être décrites, une première en liaison avec les figures 1A, 1B, une deuxième en liaison avec les figures 1C, 1D, une troisième et une quatrième en liaison avec les figures 1E, 1F, une cinquième variante de jauge de contrainte est présentée en figure 1G. D'autres variantes sont décrites plus loin avec les figures 9A - 9D.

Dans la variante des figures 1A et 1B, le point d'application P de la contrainte est de plus dans un plan perpendiculaire à l'axe H, contenant le centre de gravité G de la masse mobile 3.

En outre la jauge est disposée au-dessous de l'axe de torsion H. C'est-à-dire qu'il y a un plan commun entre la masse mobile, la deuxième zone (5, 5') et la jauge de contrainte 4, ce plan commun est le plan inférieur N2 de la masse mobile comportant la face inférieure 12 de la masse 3; on peut dire que la jauge est placée dans le plan inférieur de la masse mobile 3 dans la configuration représentée. Dans ce cas, la jauge est avantageusement formée par gravure. La jauge et la masse mobile sont situées d'un même coté du plan commun N2.

Une autre variante de ce mode de réalisation est représentée en figures 1C et 1D : la ou les jauge(s) 6 y est (sont) disposée(s) au-dessus de l'axe de torsion H. Dans ce cas, de préférence, la ou les jauge (s) 6 est (sont) formée (s) par dépôt. Il y a alors un plan commun entre la ou les jauge(s) de contrainte 6, la zone pivot 5 et la masse mobile 3, en fait le plan supérieur N1 du capteur, contenant la face 11 du dispositif. Les jauges 6 et la masse mobile 3 sont, dans cette variante, situées de part et d'autre de ce plan qui leur est commun (ce dernier contient la partie inférieure des jauges 6 et la partie supérieure 11 de la masse).

Dans les variantes des figures 1A-1D, la zone 5 formant pivot a une épaisseur voisine de celle de la masse 3. Avantageusement, la zone 5 a la même épaisseur que la masse mobile 3. L'axe pivot H est alors dans le même plan, parallèle au plan du substrat 2, que le centre de gravité G de la masse mobile 3. De plus, la zone 5 a alors deux plans, parallèles au plan du substrat 2, en commun avec la masse mobile 3. Ce sont les plans N1 et N2. Ceci reste vrai dans les modes de réalisation des figures 9A-9D.

Alternativement il est possible de réduire la hauteur de la zone pivot. C'est le cas des variantes des figures 1E et 1F dans lesquelles la hauteur h de la zone pivot 5 est strictement inférieure à celle de la masse mobile T et strictement supérieure à celle de la ou des jauges de contraintes 4, 6. La réduction de l'épaisseur de la zone pivot 5 entraîne une réduction de sa raideur. Ceci peut s'appliquer aussi aux modes de réalisation des figures 9A-9D.

La zone pivot 5 a alors sa partie inférieure dans le plan inférieur N2 du capteur, contenant la face arrière 12 de la masse 3 (leur plan commun est le plan N2, mais pas le plan N1). La zone pivot, d'épaisseur plus fine que la masse mobile, est donc positionnée proche de la partie inférieure de la masse mobile 3. L'axe H peut être alors lui aussi plus proche de cette partie inférieure de la masse 3. Cette situation modifie légèrement la force imposée à la jauge de contrainte 4, et donc la valeur et la précision des mesures.

En effet, dans ce cas là, la position basse de l'axe de rotation H, a pour effet d'augmenter la contrainte sur une jauge 4 située plus proche de l'axe pivot H, dans le plan inférieur N2 (cas de la figure 1F). La jauge a alors une partie inférieure dans le plan inférieur N2 de la masse 3. Ce plan N2 est ici commun aux trois zones.

Inversement, dans ce cas d'une zone pivot localisée en partie basse de la masse 3, la contrainte appliquée sur une jauge de contrainte 6, située « en haut » de la masse mobile (cas de la figure 1E, jauge située du coté de la masse mobile proche de la face supérieure 21 du substrat 2) est diminuée. La jauge a alors une partie inférieure dans le plan supérieur N1 de la masse 3. Le plan N2 est alors commun aux seules premières et deuxièmes zones.

Le cas de la figure 1E est celui d'une jauge de préférence déposée, celui de la figure 1F celui d'une jauge gravée.

Dans le cas de ces deux figures, la zone pivot 5 est d'épaisseur plus faible que la masse mobile 3.

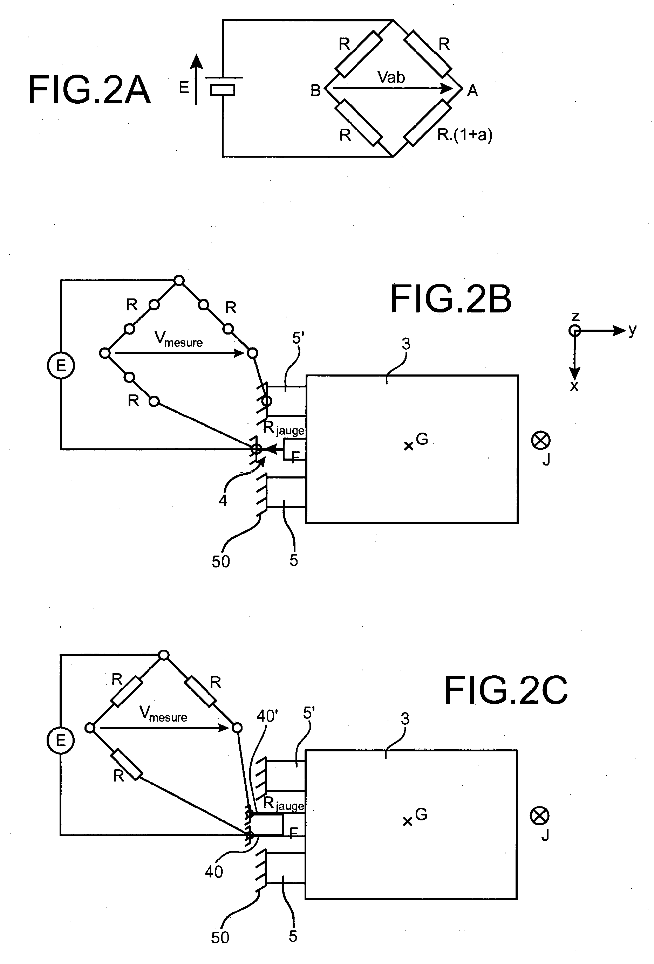

Une autre variante d'une jauge de contrainte à résistance variable du type déposée, par exemple de type piézorésistive, peut comporter une jauge de contrainte composée de deux jauges parallèles. Ce mode alternatif sera présenté plus bas en liaison avec la figure 2C.

Quelle que soit la variante envisagée de ce mode de réalisation, alternativement, la jauge de contrainte peut être du type résonateur de détection à vibration dans le plan du substrat (figure 1G).

Ce résonateur comporte une lame vibrante 40, un moyen d'excitation 41 et un moyen de mesure 42.

Le moyen pour produire l'excitation de la lame vibrante peut être une électrode formant condensateur avec la lame vibrante 40 et reliée à un générateur de courant alternatif non schématisé (figure 1G). Le résonateur vibre alors dans le plan XY formé par le plan du substrat 2. Les électrodes concernées sont situées les unes par rapport aux autres dans un plan parallèle au plan du substrat 2. La situation est alors différente de celle de la demande de brevet US6251698, où les différentes électrodes de la jauge sont les unes au dessus des autres, et où le « gap », écart entre les électrodes, a une dimension de l'ordre de quelques micromètres et est difficile à contrôler puisque obtenue par scellement d'un second substrat sur un premier substrat. Dans un dispositif selon l'invention, la vibration est dans le plan, le gap entre chaque électrode et la lame vibrante est aussi dans le plan du substrat et peut être formé au moyen d'une photolithographie (optique standard ou stepper) avec une largeur de gap contrôlée pouvant être sub-micronique.

Lors de l'application d'une contrainte suivant la longueur de la jauge de contrainte 4, perpendiculaire à la direction de vibration de la lame 40, la fréquence de vibration de la lame va varier. Cette variation est mesurée par le moyen de mesure 42.

Les moyens de mesure de la vibration de la lame vibrante 40 peuvent être de type piézorésistif, comme décrit dans FR 0803495 du 23/06/08, ou être électrostatiques, comportant une électrode 42, mesurant la fréquence de vibration de la lame vibrante au moyen de la mesure de la variation de la capacité formée entre la lame vibrante et l'électrode de mesure, l'électrode 42 étant positionnée, relativement à la lame vibrante, dans la direction de vibration de la lame vibrante.

Dans la variante du premier mode de réalisation de l'invention décrite en figure 1G, le moyen d'excitation 41 et le moyen de mesure 42 sont tous les deux capacitifs.

Dans les cas où la mesure de la contrainte est obtenue par des jauges à résistance variable (figures 1A à 1F), par exemple avec des jauges piézorésistives, la mesure de la force imposée par le mouvement de la masse mobile 3 sur la ou les jauges de contraintes 4 ou 6 peut être réalisée au moyen d'un pont de Wheatstone (dont le principe est schématisé dans la figure 2A) positionné de façon à évaluer une variation de la résistance formée par la jauge. Ainsi, si Rx est la résistance de la jauge au repos (la masse mobile n'est pas en mouvement), une rotation de la masse 3 autour de l'axe H va résulter en une variation de cette résistance, qui devient Rx(1+α). Le pont permet de mesurer la valeur de α.

Ce pont de Wheatstone peut s'appliquer selon deux variantes au dispositif selon l'invention décrit dans le premier mode de réalisation, variantes qui dépendent de la structure de la jauge de contrainte.

Dans une première variante, comme illustré en figure 2B, la jauge de contrainte piézorésistive est composée d'une seule branche 4, l'amenée de courant se fait donc par la zone pivot (par exemple par le pivot 5) et la sortie de courant par la branche 4 (ou inversement). Le pont de Wheatstone mesure alors la variation de la résistance Rx' de la branche unique de la jauge de contrainte 4 et de la résistance formée par l'amenée de courant traversant la zone pivot 5 et une partie de la masse mobile 3.

Dans une deuxième variante (figure 2C), la jauge de contrainte 4 suspendue est formée de deux bras 40 et 40' parallèles. Elle est située dans un même plan parallèle à celui de la masse 3 sismique. Dans le cas de jauges de contraintes du type déposé, une couche électriquement isolante est déposée entre la jauge 4 et la masse mobile 3. Le courant est amené par un bras 40, et sort par le deuxième bras 40' (figure 2C), ou inversement. L'avantage de cette variante est une mesure moins bruitée de la variation de résistance Rx". En effet, à la différence de la méthode décrite précédemment où la torsion de la zone pivot, qui est utilisé pour conduire le courant, peut faire varier la résistance, la variation de résistance mesurée par le pont de Wheatstone est alors uniquement due aux forces imposées à la jauge de contrainte. Le courant ne passe pas par des résistances parasites additionnelles.

Ce qui est expliqué ci-dessus, relativement aux jauges et à la troisième zone, est directement applicable aux modes de réalisation des figures 9A-9D.

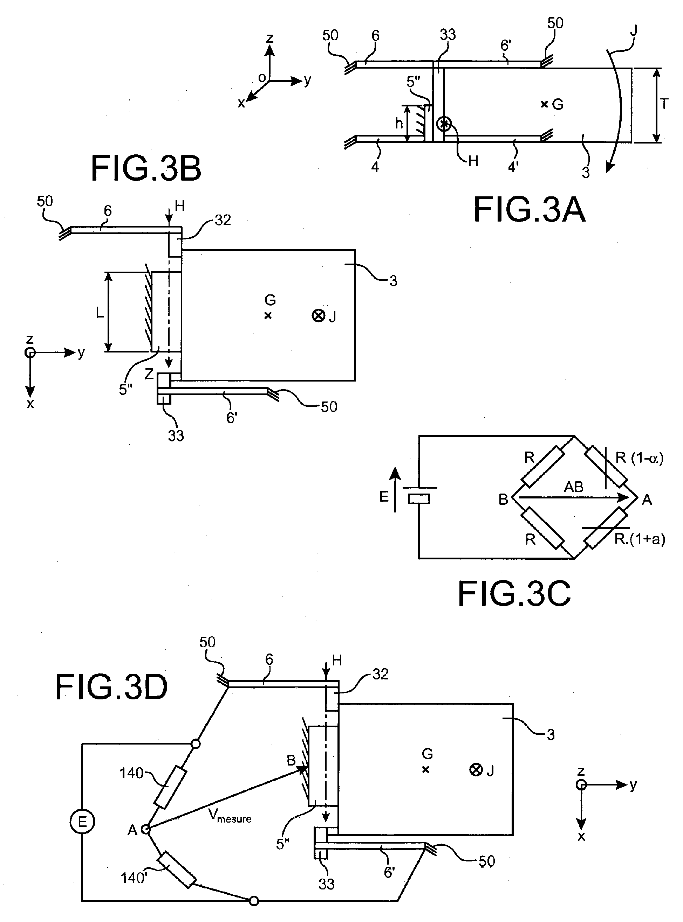

Un second mode de réalisation de l'invention, illustré en figures 3A et 3B, également applicable aux modes de réalisation des figures 9A-9D (sauf pour ce qui concerne directement la position de la deuxième zone, ou zone pivot), reprend le principe général du dispositif de type accéléromètre du premier mode de réalisation, mais en présente d'autres variantes.

Comme dans le premier mode de réalisation, il comporte une masse mobile 3 associée à un substrat comportant une face supérieure 21 et une face inférieure 22, la masse mobile comportant une face supérieure 11, dans le même plan N1 que la face supérieure du substrat 21 et une face inférieure 12.

Dans ce mode de réalisation, le moyen pour que la masse mobile 3 ne puisse se déplacer dans le plan du capteur (plan xOy de la figure 3A) est réalisé par une largeur L importante de la zone pivot 5" dans le sens de l'axe de rotation H (figure 3B). Cette largeur peut être proche de la largeur de la masse 3 elle-même, mesurée parallèlement à l'axe H tout en étant avantageusement inférieure à la largeur de la masse mobile 3.

La hauteur h de la zone pivot 5" est représentée ici plus faible que celle de la masse mobile T et plus importante que l'épaisseur e des jauges de contraintes, comme en figure 1E ou 1F, avec le même résultat, déjà expliqué ci-dessus. Alternativement, la zone pivot peut aussi être de même épaisseur que la masse mobile, comme dans le cas illustré en figure 1A. En variante, la zone pivot pourrait être disposée en haut du dispositif, de sorte qu'elle a comme plan commun, avec la masse 3, le plan N1, plan supérieur de celle-ci.

Dans ce mode de réalisation de l'invention, deux jauges de contraintes 6 et 6' sont présentes. Elles sont positionnées de manière antisymétrique, comme le montre la figure 3B :
- par rapport à un plan perpendiculaire à l'axe H et passant par le centre de gravité G,
- et par rapport à un plan contenant l'axe H et perpendiculaire au plan du capteur.

On dira donc qu'elles sont montées en différentiel. Un montage différentiel permet qu'un mouvement de la masse mobile selon l'axe sensible de détection, un mouvement selon l'axe Z dans le cas de l'invention, impose sur chacune des deux jauges une contrainte de sens opposé. En particulier, pour tout mouvement selon l'axe Z, au moins une des jauges sera en tension et au moins une autre sera en compression.

Ces deux jauges 6 et 6' sont situées au dessus du plan supérieur N1 de la masse mobile 3, ou voisines de ce plan, plan situé du coté de la face avant du substrat 2. La partie inférieure de ces jauges est donc située dans le plan supérieur N1 de la masse mobile 3. Elles sont avantageusement formées par dépôt.

Alternativement, elles pourraient être formées par gravure et situées au niveau du plan inférieur N2 de la face inférieure 12 de la masse mobile 3 (auquel cas la partie inférieure des jauges serait dans ce plan N2). Elles sont parallèles entre elles et sont toutes deux orientées perpendiculairement à l'axe H (voir figure 3A). Elles sont, elles aussi, reliées à une partie fixe 50 du dispositif.

Un déplacement de la masse mobile 3 selon J créé une force F de traction sur l'une des deux jauges 6, 6' et de compression sur l'autre jauge 6', 6. La force peut donc être mesurée de façon différentielle. L'intérêt de ce montage est que la mesure de la contrainte peut se faire par différence entre les valeurs des contraintes mesurées sur les jauges. Ainsi on peut s'affranchir des contraintes parasites (par exemple dues à la température), qui, identiques pour les deux jauges 6 et 6', s'annulent lors de la mesure différentielle. Cela permet d'obtenir une meilleure précision de mesure. On peut dire aussi que les deux jauges sont montées en différentiel.

De façon à ce que les jauges mesurent bien les variations de forces imposées par le déplacement J de la masse mobile, ce mode de réalisation de l'invention peut comporter des extensions 32 et 33 de la masse mobile 3, dans le plan de celle-ci et sensiblement parallèlement à l'axe H, qui ne gênent pas le mouvement de cette masse 3 et qui permettent aux points d'application de la force sur les jauges d'être à l'aplomb de l'axe pivot H. Ces points d'application se trouvent alors dans un plan contenant l'axe H et perpendiculaire aux plans du capteur et du substrat. Cela permet d'augmenter le bras de levier et donc d'améliorer la sensibilité du capteur.

De même, dans les autres modes de réalisation de l'invention les différentes zones sont avantageusement telles qu'il soit aisément possible de positionner le point d'application des contraintes, provenant d'un mouvement de la masse mobile 3, sur les jauges à l'aplomb de l'axe de torsion H. Un tel positionnement se fait avantageusement en formant des extensions (31, 32, 33) dans la zone de première épaisseur formant masse mobile. Ces extensions, pour ne pas modifier le positionnement de l'axe pivot H, ne sont pas en contact avec la zone pivot 5. Ainsi, les jauges, en contact avec ces extensions, ne sont préférentiellement pas situées au dessus de la zone pivot 5, c'est-à-dire qu'il n'y a pas de plan perpendiculaire à l'axe de torsion H qui traverse à la fois une jauge et une partie de la zone pivot.

Comme il a été présenté ci-dessus, la ou les jauge(s) de contraintes peut également être un résonateur de détection. Dans le cas de résonateurs de détection, la mesure différentielle des contraintes se fait au moyen d'un dispositif électronique apte à calculer les contraintes appliquées à chacune des jauges de contraintes à partir des variations de fréquence de vibration lorsqu'une contrainte est appliquée. Ce dispositif électronique est de plus apte à calculer une soustraction de l'une des contraintes, mesurée sur une première jauge par rapport à une autre contrainte, mesurée sur une deuxième jauge.

Dans le cas de jauges de contraintes du type à résistance variable, par exemple en matériau piézorésistif, la mesure en mode différentiel des variations de résistance imposées par un mouvement de la masse mobile 3 est avantageusement réalisée au moyen d'un pont de Wheatstone, présenté en figure 3C et 3D.

Dans un pont de Wheatstone différentiel les 4 branches ont chacune une résistance de valeur R. Une mesure de tension V_{AB} entre deux points A et B opposés du pont permet de mesurer la différence 2αR entre les résistances disposées de part et d'autre de l'un de ces deux points, de valeurs R(1+α) et R(1-α) et qui varient en sens inverse l'une de l'autre (figure 3C).

Les deux jauges 6, 6' de la figure 3D peuvent chacune former un bras d'un pont de Wheatstone différentiel. A chacune de ces deux jauges est associée, au repos, une résistance R de valeur connue.

Pour former un pont de Wheatstone différentiel, un point B de mesure de la tension est choisi entre les deux jauges 6 et 6', ici sur la zone pivot 5". De par la position des deux jauges (de part et d'autre du plan perpendiculaire au substrat passant par l'axe de rotation H) une rotation de la masse mobile 3 induit l'application de contraintes opposées sur les deux jauges et donc une variation de contrainte αR sur l'une des jauges et -αR sur l'autre des deux jauges.

Le pont de Wheatstone est formé avec deux autres résistances 140, 140', comme illustré sur la figure 3D. Un autre point A de mesure est positionné entre ces deux résistances.

Ainsi formé, le pont de Wheatstone différentiel permet de calculer la variation de résistance 2αR entre les résistances des jauges, variation de résistance qui est imposée aux jauges de contraintes 6, 6' par la rotation de la masse mobile 3. Cette méthode permet de s'affranchir du bruit dû à des variations de résistance parasites des jauges de contraintes, par exemple à cause de la dilatation thermique. L'amenée de courant se fait par exemple par une des jauges 6, et la sortie du courant par la deuxième jauge de contrainte 6'.

Le même type de mesure pourrait être obtenu avec deux jauges 4 et 4' situées au niveau du plan inférieur N2 de la masse mobile 3.

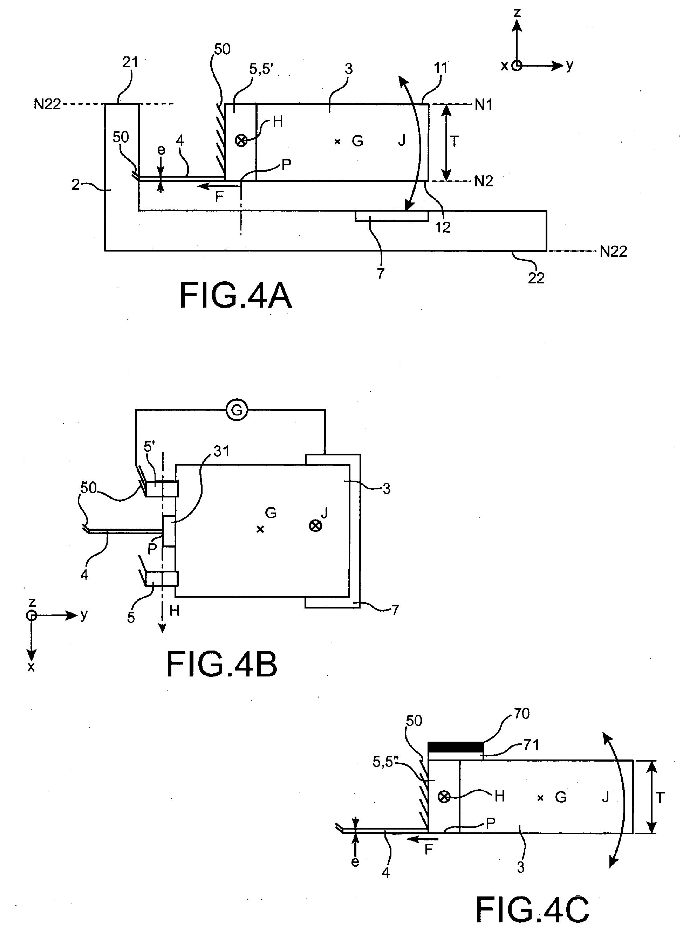

Un troisième mode de réalisation de l'invention, de type capteur de masse, est présenté dans les figures 4A à 4D. Ce capteur peut être appliqué à la réalisation d'un capteur chimique.

Ce dispositif peut être basé sur la structure de base de l'un ou l'autre des premiers modes de réalisation de l'invention.

En effet, un tel dispositif comporte une première zone, assimilable à une masse mobile 3, reliée au substrat **2** composant le capteur par une zone pivot pouvant avoir une épaisseur inférieure ou égale à la première zone. Cette zone pivot peut avoir un plan commun avec la masse mobile 3, au moins selon la face inférieure 12 de la masse mobile 3. La seconde zone (zone pivot) est telle que les mouvements de la masse mobile 3 sont limités à une rotation autour d'un axe H, compris dans le plan du substrat, passant par la seconde zone. Le mouvement est donc là encore de type « hors plan » du substrat. A ces deux premières zones est ajoutée de plus une troisième zone, composant au moins une jauge de contrainte.

Comme dans les modes de réalisations précédents, la jauge de contrainte 4 peut être de type résonateur de détection ou être avantageusement du type jauge suspendue à résistance variable, de préférence du type piézorésistif, avec une jauge simple ou double.

Comme pour les modes de réalisation précédents, il peut y avoir plusieurs jauges de contrainte 4 et 4', préférentiellement positionnées en différentiel.

Dans l'exemple illustrant ce mode de réalisation, la structure représentée est du type de celle des figures 1A et 1B, mais on peut aussi prendre, par exemple, celui de l'une des figures 9A - 9D.

La différence entre ce mode de réalisation de l'invention et les deux modes de réalisation précédents est la présence d'un moyen de mise en vibration de la masse mobile 3.

Ce moyen de mise en vibration peut être sous la forme d'une électrode 7 positionnée sous tout ou partie de la masse mobile ; la mise sous tension variable périodiquement de l'électrode 7 conduit à une mise en mouvement de la masse mobile 3 selon une vibration de même période que l'excitation (figures 4A et 4B). La masse 3 est alors en matériau conducteur ou semi-conducteur, par exemple en métal ou en silicium dopé à plus de 10¹⁵ at/cm³.

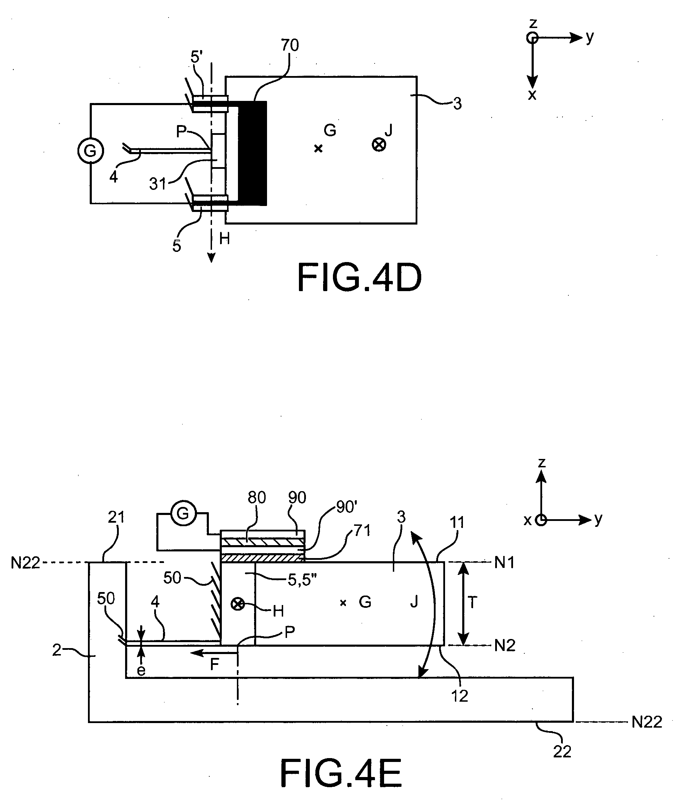

Alternativement, le moyen de mise en vibration peut être formé par un bilame composé d'une couche conductrice 70, par exemple métallique, déposée au moins partiellement au dessus de l'axe pivot H et partiellement sur la masse mobile, isolé électriquement de la masse mobile 3 par une couche isolante 71, cette couche déposée ayant un coefficient de dilatation thermique différent de celui du matériau composant la masse mobile (figure 4C et 4D). La mise en mouvement de la masse mobile se fait alors par une différence des dilatations entre les deux matériaux lors d'une montée locale en température obtenue par exemple par le passage d'un courant dans la structure, ce qui entraîne un effet bilame au niveau de la charnière formée par la zone pivot 5.

Selon une autre alternative, le moyen de mise en vibration de la masse mobile peut être composé d'une couche de matériau piézoélectrique 80, déposée au dessus d'au moins une portion de la masse mobile dont elle est séparée par une couche 71 de matériau isolant, reliée à deux extrémités à un système de mise sous tension variable périodiquement (figures 4E). La mise sous tension périodique de la couche piézoélectrique induit une déformation périodique de celle-ci et donc une mise en vibration de la masse mobile 3. La mise sous tension se fait par exemple par la présence, d'une part au dessus de la couche piézo-électrique 80 et d'autre part entre la couche piézo-électrique et la couche isolante 71 d'électrodes 90, 90', reliées à un générateur de tension.

Lors de la vibration de la masse mobile, une contrainte est appliquée sur les jauges de contraintes 4.

Dans le cas d'un capteur de masse chimique ou biochimique, si la masse mobile 3 adsorbe ou absorbe des molécules à sa surface ou dans son volume (par exemple après fonctionnalisation de cette surface ou de ce volume), la masse globale augmente. Il en résulte une variation de la fréquence de vibration.

En mesurant la variation de la fréquence de résonance de la masse, il est possible de remonter par calcul à la masse adsorbée ou absorbée.

Dans un dispositif selon ce mode de réalisation, il est possible de fonctionnaliser la surface de la masse mobile par exemple en ajoutant sur la masse mobile un revêtement permettant l'adsorption sélective d'une molécule ou d'un type de molécule. Ce revêtement peut être par exemple une couche de matériau spécifique, par exemple une couche de fonctionnalisation de type polymère. Il est alors possible de remonter par calcul à la quantité de molécules adsorbées.

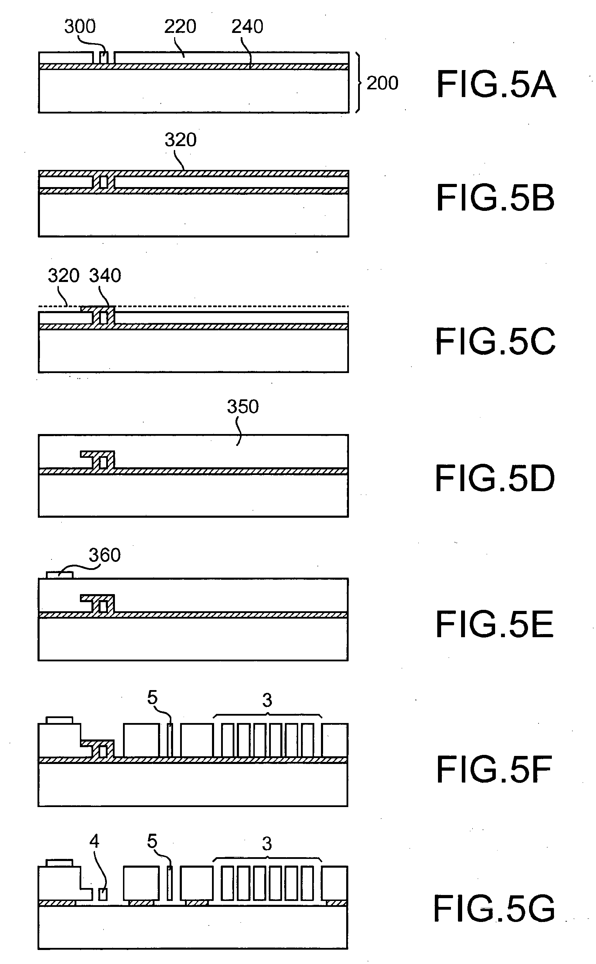

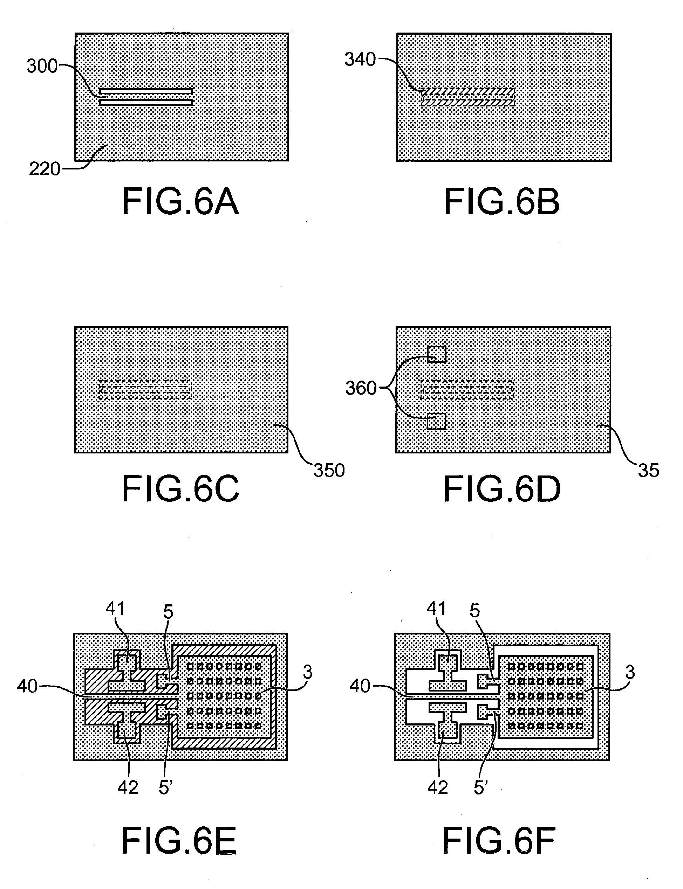

Un premier procédé de réalisation d'un dispositif selon l'invention va être décrit en liaison avec les figures 5A-5G et 6A-6F. Il correspond au cas d'une jauge gravée (celui de la figure 1A). La jauge est ici de type résonateur.

Ce premier procédé met en oeuvre une épitaxie d'un matériau semi-conducteur (ici du Silicium mais ce procédé peut aussi s'appliquer au cas du SiGe).

Un substrat SOI 200 est tout d'abord sélectionné (figure 5A). Par exemple, il comporte une couche 220 de Si de 0,5 µm d'épaisseur pour une couche 240 d'oxyde SiO₂ de 1 µm d'épaisseur.

Il est ensuite procédé à une lithographie puis une gravure de la couche 220 de Si pour définir une portion 300 de la jauge piézorésistive (figures 5A et 6A) ou pour définir un résonateur et des électrodes de détection et d'excitation. Cette partie est donc définie dans la couche superficielle de semi-conducteur, d'épaisseur faible.

La gravure est arrêtée sur la couche 240 de SiO₂. On procède ensuite au dépôt d'une couche (non représentée) de SiO₂, par exemple d'épaisseur 0,5 µm, suivi d'une planarisation avec arrêt sur la couche 220 de Si, puis à un dépôt 320 de SiO₂, par exemple d'environ 0.4 µm d'épaisseur (figure 5B).

On procède ensuite (figures 5C et 6B) à une lithographie par gravure, dans la couche 320 de SiO₂, d'une protection 340 au-dessus de la jauge de contrainte.

Une épitaxie 350 de Silicium est ensuite réalisée (figures 5D et 6C), sur la couche superficielle 220 initiale de semi-conducteur. L'épaisseur de la couche épitaxiée peut être supérieure à l'épaisseur de la couche 320, par exemple d'environ 4 µm.

Un dépôt métallique Ti/Ni/Au, puis une lithographie par gravure, sont ensuite réalisés (figures 5E et 6D) en vue de former des contacts 360.

Il est ensuite procédé à une lithographie et à une gravure anisotrope (par exemple : DRIE) de la structure mécanique (figures 5F et 6E), avec arrêt sur la couche de dioxyde SiO₂ 240. Cette étape permet de réaliser, au cours de la même opération, la masse mobile 3 et la charnière 5, sur une même épaisseur de matériau.

Le dispositif est enfin libéré par gravure HF (humide ou vapeur) de la couche 240 (figures 5G et 6F), avec arrêt au temps. Sur ces figures 5G et 6F, on voit en outre clairement la jauge 4.

Ce procédé peut être adapté au cas d'une jauge piézorésistive en supprimant les étapes de formation d'électrodes d'excitation et de détection.

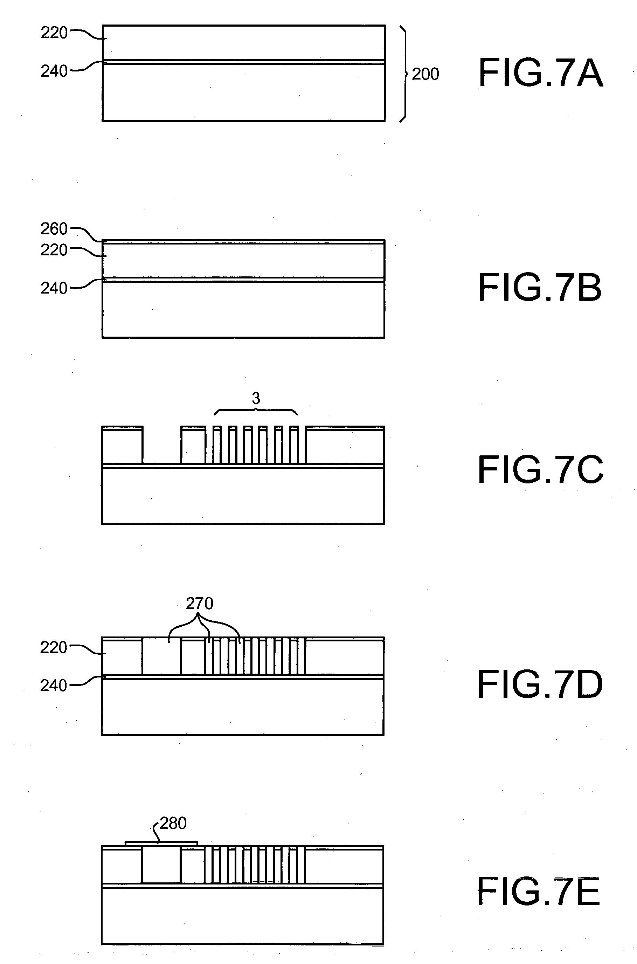

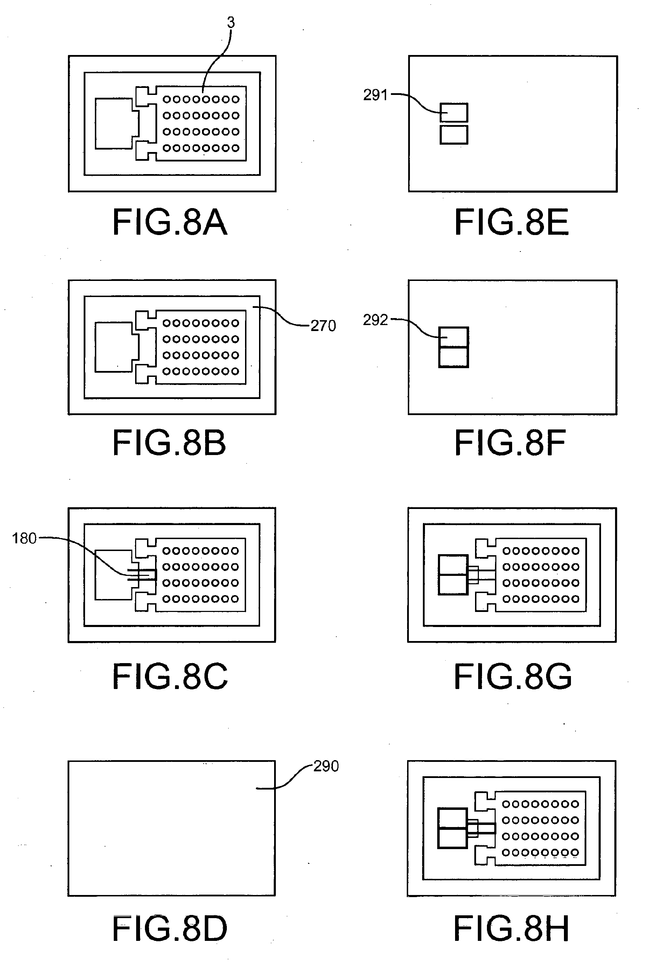

Un deuxième procédé va être décrit en liaison avec les figures 7A-7J et 8A-8H. Il correspond au cas d'une jauge déposée (celui de la figue 1C). La jauge est ici de type silicium polycristallin (elle peut être alternativement de type silicium monocristallin ou SiGe mono- ou poly-cristallin).

Un substrat SOI 200 est tout d'abord sélectionné (figure 7A). Par exemple, il comporte une couche 220 de Si de 4 µm d'épaisseur pour une couche 240 d'oxyde SiO₂ de 1 µm d'épaisseur.

Il est ensuite procédé à un dépôt d'une couche 260 de SiN, pour isoler électriquement les jauges du substrat et servir de couche d'arrêt à la planarisation, d'environ 0,5 µm (figure 7B).

Il est ensuite procédé à une lithographie, une gravure de la couche de SiN et à une gravure anisotrope (par exemple : DRIE) de la structure mécanique (figures 7C et 8A), avec arrêt sur la couche de dioxyde SiO₂ 240. Cette étape permet de réaliser la masse mobile 3 ainsi que de définir la zone pivot.

On procède ensuite (figures 7D et 8B) à un dépôt de SiO₂ 270 remplissant au moins les zones gravées de la couche 220.

Puis l'on procède à une étape de planarisation avec arrêt sur la couche SiN 260.

Puis un dépôt 280 (figures 7E et 8C) est réalisé sur la structure précédemment obtenue, en vue de la formation de la jauge. C'est par exemple un dépôt de WN (par exemple 20 nm d'épaisseur) et de Au (par exemple 100 nm d'épaisseur). Alternativement, il est possible de déposer un matériau de type piézorésistif comme du silicium polycristallin ou du SiGe polycristallin. Une opération de lithographie et de gravure permet ensuite de définir la jauge.

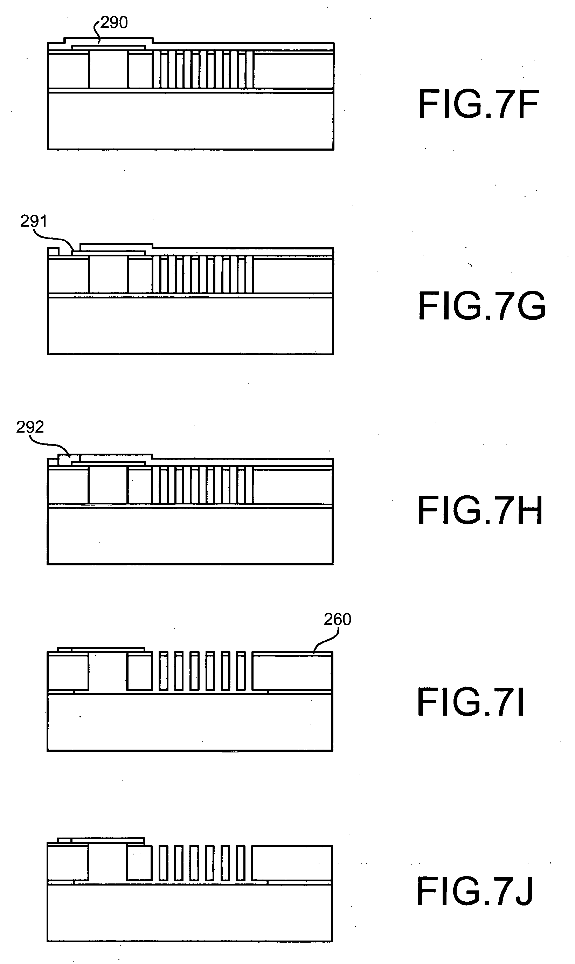

Un dépôt de SiO₂ 290, par exemple d'épaisseur 0,4 µm, est ensuite réalisé sur l'ensemble de la structure (figures 7F et 8D).

Une opération de lithographie et de gravure permet ensuite d'ouvrir des zones 291 de contact dans cette couche 290 (figures 7G et 8E).

Puis un dépôt 292 (figures 7H et 8F) est réalisé dans les zones 291. C'est par exemple un dépôt de WN et de Au. Une opération de lithographie et de gravure permet ensuite de le définir précisément.

Le dispositif est enfin libéré par gravure HF (humide ou vapeur) du dépôt 270 de SiO₂ (figures 7I et 8G), avec arrêt au temps.

La couche 260 de SiN est enfin gravée en surface (figures 7J et 8H).

Ce procédé peut être adapté au cas d'une jauge de type résonateur par l'ajout d'une couche d'excitation en matériau piézo-électrique ou thermoélectrique au dessus de la couche métallique ou piézorésistive de la jauge 280, décrite en figures 7E et 8C. Ce dépôt peut se faire avant ou après la définition de la forme de la jauge par lithographie. Le deuxième cas, nécessite une étape de lithographie supplémentaire pour limiter le dépôt de la couche d'excitation sur une portion de la jauge 280.

Dans les modes de réalisations qui ont été présentés ci-dessus, la deuxième zone, ou zone pivot, est sensiblement dirigée (figures 3B, 3D), ou comporte (figures 1B, 1D, 1G, 2B, 2c) des portions disposées, suivant un axe y (voir notamment le schéma des figures 1A et 1B), qui est sensiblement perpendiculaire à l'axe H.

En variante, il est possible d'avoir une liaison pivot dirigée suivant l'axe X, comme illustrée sur les figures 9A - 9D, qui sont des vues de dessus d'un dispositif selon l'invention. La liaison pivot est alors sollicitée selon un mode de torsion, alors que, dans les modes de réalisation présentés précédemment, la liaison pivot est sollicitée en flexion.

De même que précédemment, la jauge de contrainte est reliée à la masse dans un plan parallèle au plan du capteur mais qui ne contient pas l'axe H.

Sur les figures 9A - 9D, les références numériques identiques à celles des figures précédentes qui désignent des éléments identiques ou similaires. En particulier, la référence 50 désigne une zone fixe du dispositif, à laquelle sont reliés des éléments 55, 55' constituant la deuxième zone, et la troisième zone 4.

En figure 9A et en figure 9B, les éléments constituant la deuxième zone sont dirigés selon l'axe X, parallèle à l'axe H. Il s'agit de deux bras disposés de part et d'autre de la masse 3.

Sur la figure 9B, la liaison de la troisième zone 4 avec la masse 3 est réalisée dans une encoche ou une zone évidée 30 de cette masse 3.

En figure 9C et en figure 9D, les éléments constituant la deuxième zone sont disposés à l'intérieur de la masse 3. Celle-ci comporte, encore, une zone évidée 30', à l'intérieur de laquelle ce sont cette fois les éléments 55, 55' constitutifs de la deuxième zone qui sont disposés. Ce mode de réalisation n'empêche pas que l'extrémité de ces éléments 55,55', soient reliés, là encore, à une partie fixe 50 du dispositif.

En figure 9D, on réalise une mesure différentielle, sur le principe de ce qui a déjà été décrit ci-dessus, par exemple en liaison avec les figures 3B et 3D.

Comme on le comprend d'après les explications ci-dessus, la liaison pivot peut être réalisée soit à l'extérieur de la masse 3, soit à l'intérieur de cette masse (voir notamment le mode de réalisation des figures 9C et 9D).

Le procédé de réalisation qui a été décrit ci-dessus en liaison avec les figures 5A - 8H peut être adapté à la réalisation de dispositifs des figures 9A - 9D, avec les étapes supplémentaires de gravure des zones 30, 30'.

Les structures des figures 9A - 9D sont compatibles avec la réalisation d'un capteur de masse, comme décrit ci-dessus en liaison avec les figures 4A - 4D.

## Revendications

1. Capteur MEMS de type de surface, réalisé dans un substrat (2) dont la surface définit un plan, dit plan du substrat, ce capteur étant **caractérisé en ce qu'**il comporte :
a) Une première zone, dite zone épaisse, présentant une première épaisseur (T), dont deux surfaces forment un premier plan (N1) et un deuxième plan (N2) parallèles entre eux et au plan du substrat, cette zone formant au moins une masse mobile (3) à mouvement hors du plan du substrat,
b) une deuxième zone, reliée à une zone fixe (50) du substrat, cette deuxième zone formant au moins une liaison pivot (5) de la masse mobile par rapport audit substrat, d'épaisseur inférieure ou égale à celle de la masse mobile et reliée à celle-ci, l'axe (H) de la liaison pivot étant disposé entre le premier plan (N1) et le deuxième plan (N2), et parallèle à chacun d'eux, cette deuxième zone ayant, suivant une direction perpendiculaire au plan du substrat, une partie inférieure et une partie supérieure, au moins l'une de ces deux parties étant dans le premier plan (N1) ou dans le deuxième plan (N2), dit plan commun aux première et deuxième zones,
c) une troisième zone, dite zone mince, d'épaisseur plus faible que celle de la deuxième zone, formant au moins une jauge de contrainte de type suspendue (4), pour la détection du mouvement de la masse mobile autour de l'axe de la liaison pivot, cette troisième zone ayant, suivant une direction perpendiculaire au plan du substrat, une partie inférieure et une partie supérieure, l'une de ces deux parties étant dans le plan commun aux première et deuxième zones, et cette troisième zone :
- s'étendant dans un plan parallèle au plan du substrat (2) ne contenant pas l'axe de la liaison pivot,
- s'étendant perpendiculairement à l'axe de rotation de la liaison pivot,
- étant reliée à la masse mobile d'un coté et au substrat de l'autre coté.

2. Capteur suivant la revendication 1, la deuxième zone :
- ayant une largeur, suivant la direction de l'axe pivot H, inférieure à la largeur de la masse mobile suivant cette direction,
- ou comportant deux bras allongés (55, 55'), disposés de part et d'autre de la masse mobile ou dans une encoche (30') réalisée dans cette masse mobile.

3. Capteur selon l'une des revendications 1 ou 2, la masse mobile (3) ayant une épaisseur strictement supérieure à celle de la zone pivot (5).

4. Capteur selon l'une des revendications 1 à 3, la troisième zone et la première zone
- ayant un plan commun, qui est le deuxième plan de la masse, et sont situés du même côté par rapport à ce plan,
- ou ayant un plan commun, qui est le deuxième plan de la masse, et sont situés de part et d'autre de ce plan.

5. Capteur selon l'une des revendications 1 à 4, l'axe (H) de la liaison pivot étant dans un plan parallèle au premier plan (N1) et au deuxième plan (N2) du capteur, passant par le centre de gravité G de la masse mobile (3).

6. Capteur selon l'une des revendications 1 à 5, les points d'applications (P) des contraintes produites par la masse mobile sur chacune des au moins une jauges (4) étant à l'aplomb de l'axe pivot (H), c'est à dire dans un plan perpendiculaire à chacun des premier plan (N1) et deuxième plan (N) et contenant l'axe (H) de la liaison pivot.

7. Capteur selon l'une des revendications 1 à 6, la troisième zone comportant au moins deux jauges de contraintes, situées de manière anti-symétrique l'une par rapport à l'autre et par rapport :
- à un plan perpendiculaire aux premier et deuxième plans (N1, N2) de la masse mobile (3) et contenant l'axe de torsion (H),
- et à un plan perpendiculaire à l'axe de torsion.

8. Capteur selon l'une des revendications 1 à 7, la ou les jauge(s) de contrainte (4, 6) étant en un matériau piézorésistif tel que du silicium monocristallin ou en silicium poly-cristallin, ou des nanofils de silicium, ou des nanotubes de carbones ou en SiGe, monocristallin ou polycristallin.

9. Capteur selon l'une des revendications 1 à 7, la ou les jauge(s) de contrainte (4, 6) comportant au moins un résonateur de détection, comportant au moins une lame vibrante (40) à vibration dans un plan parallèle aux premier et deuxièmes plans (N1, N2), un moyen d'excitation (41) et un moyen de détection de la vibration (42).

10. Capteur selon la revendication 9, la ou les jauges de contraintes (4, 6) comportant des moyens électrostatiques d'excitation de la lame vibrante (40) et/ou de détection de la résonance.

11. Capteur selon la revendication 10, la ou les jauges de contraintes (4, 6) comportant au moins une électrode (41, 42) disposée, par rapport à la lame vibrante (40), dans la direction de vibration.

12. Capteur selon l'une des revendications 9 à 11, la ou les jauges de contraintes (4, 6) comportant des moyens piézorésistifs de détection de la résonance, disposés sur la lame vibrante (40).

13. Capteur selon l'une des revendications 1 à 12, comportant en outre des moyens de mise en mouvement (7) de la masse mobile (3).

14. Capteur selon la revendication 13, les moyens de mise en mouvement (7) de la masse mobile comportant :
- une électrode présente sur ou dans le substrat (2) en regard de l'une des faces de la masse mobile (3),
- ou une couche de matériau conducteur (80) déposée sur la masse mobile et reliée au substrat, isolée électriquement de la masse mobile par une couche isolante (71), formant un bilame avec la masse mobile,
- ou une couche de matériau piézoélectrique (80), déposée sur la masse mobile et reliée au substrat, isolée électriquement de la masse mobile par une couche isolante (71).

15. Capteur selon l'une des revendications 1 à 14, la masse mobile comportant en outre à sa surface des moyens pour sélectionner au moins un type de molécules pouvant être adsorbé ou absorbé à la surface, par exemple des radicaux de molécules donnés ou une couche de matériau sensible à un seul type de molécule.

## Patentansprüche

1. MEMS-Sensor vom Oberflächentyp, welcher in einem Substrat (2) realisiert ist, dessen Oberfläche eine Ebene, die sogenannte Substratebene, definiert, wobei der Sensor **dadurch gekennzeichnet ist, dass** er Folgendes aufweist:
a) einen ersten Bereich, den sogenannten dicken Bereich, welcher eine erste Stärke oder Dicke (T) aufweist, dessen beiden Oberflächen eine erste Ebene (N1) sowie eine zweite Ebene (N2) bilden, welche zueinander und zur Substratebene parallel sind, wobei dieser Bereich zumindest eine bewegliche Masse (3) zur Herausbewegung aus der Substratebene bildet;
b) einen zweiten Bereich, welcher mit einem festen bzw. fixierten Bereich (50) des Substrats verbunden ist, wobei der zweite Bereich zumindest eine Schwenkverbindung (5) der mobilen Masse zum Substrat bildet, eine geringere oder gleiche Dicke wie die der mobilen Masse aufweist und mit ihr verbunden ist, wobei die Achse (H) der Schwenkverbindung zwischen der ersten Ebene (N1) und der zweiten Ebene (N2) angeordnet ist, und parallel zu beiden liegt, wobei der zweite Bereich folgend einer senkrechten Richtung zur Substratebene einen unteren Teil und einen oberen Teil aufweist, wobei zumindest einer der beiden Teile in der ersten Ebene (N1) oder der zweiten Ebene (N2) liegt, der sogenannten gemeinsamen Ebene des ersten und zweiten Bereichs,
c) einen dritten Bereich, den sogenannten dünnen Bereich, mit einer geringeren Dicke als die Dicke des zweiten Bereichs, welcher zumindest einen Dehungsmessstreifen vom Hängetyp (4) aufweist, um die Bewegung der mobilen Masse um die Achse der Schwenkverbindung zu erfassen, wobei der dritte Bereich folgend einer senkrechten Richtung zur Substratebene einen unteren Teil und einen oberen Teil aufweist, wobei einer dieser zwei Teile in der gemeinsamen Ebene von erstem und zweitem Bereich liegt, und wobei der dritte Bereich
- sich in einer Ebene parallel zur Substratebene (2) erstreckt, welche die Achse der Schwenkverbindung nicht aufweist;
- sich senkrecht zur Rotationsachse der Schwenkverbindung erstreckt;
- mit der mobilen Masse auf der einen Seite und mit dem Substrat auf der anderen Seite verbunden ist.

2. Sensor nach Anspruch 1, wobei der zweite Bereich Folgendes aufweist:
- eine Breite, welche der Richtung der Schwenkachse H folgend geringer ist als die dieser Richtung folgenden Breite der mobilen Masse;
- oder welcher zwei längliche Arme (55, 55') aufweist, welche beiderseits der mobilen Masse oder in einer in dieser mobilen Masse realisierten Kerbe (30') angeordnet sind.

3. Sensor nach einem der Ansprüche 1 oder 2, wobei die mobile Masse (3) eine strikt größere Dicke als die Dicke des Schwenkbereichs (5) aufweist.

4. Sensor nach einem der Ansprüche 1 bis 3, wobei der dritte Bereich und der erste Bereich
- eine gemeinsame Ebene aufweisen, welche die zweite Ebene der Masse ist, und welche auf derselben Seite bezüglich dieser Ebene angeordnet sind;
- oder eine gemeinsame Ebene aufweisen, welche die zweite Ebene der Masse ist, und welche beiderseits dieser Ebene angeordnet sind.

5. Sensor nach einem der Ansprüche 1 bis 4, wobei die Achse (H) der Schwenkverbindung in einer Ebene parallel zur ersten Ebene (N1) und zur zweiten Ebene (N2) des Sensors liegt, welche von dem Schwerpunkt G der mobilen Masse (3) durchlaufen wird.

6. Sensor nach einem der Ansprüche 1 bis 5, wobei die Aufbringungspunkte (P) der von der mobilen Masse auf jeden der mindestens einen Messstreifen (4) aufgebrachten mechanischen Spannung senkrecht zur Schwenkachse (H) liegen, d.h. in einer Ebene senkrecht zur ersten Ebene (N 1) und zur zweiten Ebene (N2), und die Achse (H) der Schwenkverbindung aufweisen.

7. Sensor nach einem der Ansprüche 1 bis 6, wobei der dritte Bereich mindestens zwei Dehnungsmessstreifen aufweist, welche in antisymmetrischer Weise zueinander und bezüglich:
- einer senkrechten Ebene zur ersten und zweiten Ebene (N1, N2) der mobilen Masse (3) angeordnet sind, und in welcher die Torsionsachse (H) liegt;
- und einer senkrechten Ebene zur Torsionsachse.

8. Sensor nach einem der Ansprüche 1 bis 7, wobei der/die Dehnungsmessstreifen (4, 6) aus einem piezoresistiven Material wie zum Beispiel monokristallinem oder polykristallinem Silizium hergestellt ist/sind, oder aus Nanodrähten aus Silizium, oder aus Nanoröhren aus Kohlenstoff oder aus monokristallinem oder polykristallinem SiGe.

9. Sensor nach einem der Ansprüche 1 bis 7, wobei der oder die Dehnungsmessstreifen (4, 6) mindestens einen Detektionsresonator aufweisen, welcher mindestens eine Vibrationsplatte (40) zur Vibration bzw. Schwingung in einer Ebene parallel zur ersten und zweiten Ebene (N1, N2), eine Erregungsvorrichtung (41) und eine Vorrichtung (42) zur Erfassung der Schwingung (42) aufweist.

10. Sensor nach Anspruch 9, wobei der oder die Dehnungsmessstreifen (4, 6) eine elektrostatische Vorrichtung zur Erregung der Vibrationsplatte (40) und/oder zur Erfassung der Resonanz aufweisen.

11. Sensor nach Anspruch 10, wobei der oder die Dehnungsmessstreifen (4, 6) mindestens eine Elektrode (41, 42) aufweisen, welche bezüglich der Vibrationsplatte (40) in die Richtung der Schwingung angeordnet ist.

12. Sensor nach einem der Ansprüche 9 bis 11, wobei der oder die Dehnungsmessstreifen (4, 6) eine piezoresistive Vorrichtung zur Erfassung der Resonanz aufweisen, welche auf der Vibrationsplatte (40) angeordnet ist.

13. Sensor nach einem der Ansprüche 1 bis 12, welcher darüber hinaus eine Vorrichtung (7) zur Inbewegungssetzung der mobilen Masse (3) aufweist.

14. Sensor nach Anspruch 13, wobei die Vorrichtung (7) zur Inbewegungssetzung der mobilen Masse Folgendes aufweist:
eine vorliegende Elektrode auf oder in dem Substrat (2) bezüglich der Seiten der mobilen Masse (3);
oder eine Schicht aus leitendem Material (80), welche auf der mobilen Masse angeordnet ist und mit dem Substrat verbunden ist, wobei die Schicht von der mobilen Masse durch eine Isolierschicht (71) elektrisch isoliert ist, wodurch ein Bimetallstreifen mit der mobilen Masse gebildet wird;
oder eine Schicht aus piezoelektrischem Material (80), welche auf der mobilen Masse angeordnet ist und mit dem Substrat verbunden ist, wobei die Schicht von der mobilen Masse durch eine Isolierschicht (71) elektrisch isoliert ist.

15. Sensor nach einem der Ansprüche 1 bis 14, wobei die mobile Masse darüber hinaus an ihrer Oberfläche eine Vorrichtung zur Selektion zumindest eines Typs von Molekülen, welche an der Oberfläche adsorbiert oder absorbiert werden können, aufweist, beispielsweise Radikale der vorhandenen Moleküle oder eine Schicht aus einem Material, welches einem einzigen Typ von Molekülen gegenüber empfindlich ist.

## Claims

1. MEMS surface type sensor, made in a substrate the surface of which defines a plane, known as substrate plane, this sensor comprising:
a) a first zone, called thick zone, having a first thickness (T), of which two surfaces form a first plane (N1) and a second plane (N2) parallel in relation to one another and to the plane of the substrate, this zone forming at least one mobile mass (3) with movement outside the plane of the substrate,
b) a second zone, linked to a fixed zone (50) of the substrate, this second zone forming at least a pivot link (5) of the mobile mass in relation to said substrate, and having a thickness less or equal to that of the mobile mass and being linked to it, the axis (H) of the pivot link being placed between the first plane (N1) and the second plane (N2), and parallel to each of them, this second zone having, along a direction perpendicular to the substrate plane, a lower part and an upper part, at least one of these parts being in the first plane (N1) or in the second plane (N2), known as plane common to the first and second zones,
c) a third zone, called thin zone area, of a lesser thickness than that of the second zone, forming at least a suspended type strain gauge (4), for the detection of the movement of the mobile mass around the axis of the pivot link, this third zone having, along a direction perpendicular to the substrate plane, a lower part and an upper part, one of these parts being in the plane common to the first and second zones, and this third zone:
- extending parallel to the substrate plane (2) not containing the axis of the pivot link,
- extending perpendicularly to the rotation axis of the pivot link,
- being linked to the mobile mass on the one side and to the substrate on the other.

2. Sensor according to claim 1, the second zone:
- having a width, along the direction of the pivot axis H, less than the width of the mobile mass along this direction;
- or including two extended arms (55, 55'), placed on either side of the mobile mass or in a gap (30') made in this mobile mass.

3. Sensor according to one of claims 1 or 2, the mobile mass (3) having a thickness strictly greater than that of the pivot zone (5).

4. Sensor according to one of claims 1 to 3, the third zone and the first zone:
- having a common plane, which is the second plane of the mass and being situated on the same side in relation to this plane,
- or having a common plane, which is the second plane of the mass, and being situated on both sides of this plane.

5. Sensor according to one of claims 1 to 4, the axis (H) of the pivot link being in a plane parallel to the first plane (N1) and to the second plane (N2) of the sensor, going through the center of gravity (G) of the mobile mass (3).

6. Sensor according to one of claims 1 to 5, the application points (P) of the strains produced by the mobile mass on each of the gauges (4) being vertical to the pivot axis (H), i.e. in a perpendicular plane to each of the first plane (N1) and second plane (N) and containing the axis (H) of the pivot link.

7. Sensor according to one of claims 1 to 6, the third zone including at least two strain gauges, situated in an anti-symmetrical fashion in relation to each other and in relation:
- to a plane perpendicular to the first and second planes (N1, N2) of the mobile mass (3) and containing the torsion axis (H),
- and to a plane perpendicular to the torsion axis.

8. Sensor according to one of claims 1 to 7, the strain gauge (s) (4, 6) being made of a piezo-resistant material such as monocrystalline silicon or polycrystalline silicon or of silicon nanowires or carbon nanotubes or of monocrystalline or polycrystal.line SiGe.

9. Sensor according to one of claims 1 to 7, the strain gauge(s) (4, 6) including at least a detection resonator, including at least a vibrating blade (40) vibrating in a plane parallel to the first and second planes (N1, N2), a means of excitation (41) and a means of detecting the vibration (42).

10. Sensor according to claim 9, the strain gauge(s) (4, 6) including electrostatic means to excite the vibrating blade (40) and/or to detect of the resonance.

11. Sensor according to claim 10, the strain gauge (s) (4,6) including at least one electrode (41, 42) placed, in relation to the vibrating blade (40), in the direction of the vibration.

12. Sensor according to one of claims 9 to 11, the strain gauge(s) (4, 6) including piezo-resistive means of resonance detection, placed on the vibrating blade (40).

13. Sensor according to one of claims 1 to 12, also including means to trigger movement (7) of the mobile mass (3).

14. Sensor according to claim 13, with the means to trigger movement (7) of the mobile mass including:
- an electrode present on, or in, the substrate (2) with regard to one of the sides of the mobile mass (3),
- or a layer of conductive material (80) placed on the mobile mass and linked to the substrate, electrically insulated from the mobile mass by a layer of insulation (71), forming a bimetal with the mobile mass;
- or a layer of piezo-electric material (80), placed on the mobile mass and linked to the substrate, electrically insulated from the mobile mass by a layer of insulation (71).

15. Sensor according to one of claims 1 to 14, the mobile mass also comprising on its surface means to select at least a type of molecule capable of being surface adsorbed or absorbed, for example radicals of given molecules or a layer of material sensitive to a single type of molecule.
